# EUROPÄISCHE PATENTSCHRIFT

(11) **EP 2 259 929 B1**
(45) Veröffentlichungstag und Bekanntmachung des Hinweises auf die Patenterteilung: **27.06.2018**
(21) Anmeldenummer: 08872856.3
(22) Anmeldetag: 31.10.2008
(51) Int. Cl.: B42D 25/29, B41M 3/14, B44F 1/08, B32B 38/00, B32B 27/00, B42D 25/23, B42D 25/00, B42D 25/45, B42D 25/21, B42D 25/24

(54) **DOKUMENT MIT SICHERHEITSDRUCK AUS PIXELN BESTEHEND AUS VARIIERTEN BILDPUNKTEN**
DOCUMENT COMPRISING A SECURITY PRINT MADE FROM PIXELS COMPOSED OF VARIED IMAGE POINTS
DOCUMENT AVEC IMPRESSION DE SÉCURITÉ EN PIXELS COMPOSÉS DE POINTS D'IMAGE VARIÉS

(30) Priorität: 29.02.2008 DE 102008012420
(43) Veröffentlichungstag der Anmeldung: 15.12.2010
(73) Patentinhaber: Bundesdruckerei GmbH, 10969 Berlin (DE); Covestro Deutschland AG, 51373 Leverkusen (DE)
(72) Erfinder: SPRINGMANN, Edward, 10249 Berlin (DE); PUDLEINER, Heinz, 47800 Krefeld (DE)
(74) Vertreter: Patentanwälte Bressel und Partner mbB
(86) Internationale Anmeldenummer: PCT/EP2008/009343
(87) Internationale Veröffentlichungsnummer: WO 2009/106108

(56) Entgegenhaltungen:
- EP-A- 0 343 310
- EP-A- 0 384 274
- EP-A- 0 430 282
- EP-A- 0 967 091
- EP-A- 1 415 828
- EP-A- 1 640 156
- DE-A- 2 225 471
- DE-A- 4 134 539
- GB-A- 2 282 563
- US-A- 4 790 566

## Beschreibung

### Gebiet der Erfindung

Die Erfindung betrifft ein Verfahren zum Herstellen eines Dokuments, ein gemäß dem Verfahren hergestelltes Dokument, ein Authentisierungs-Verfahren zum Feststellen, ob das Dokument authentisch ist, und eine Verwendung einer Authentisierungs-Vorrichtung. Bei dem Dokument handelt es sich insbesondere um ein Sicherheits- und/oder Wertdokument. Die Erfindung betrifft Dokumente, die in digitalen Druckverfahren hergestellte Druckbilder aufweisen. Ein besonderes Anwendungsgebiet sind kartenförmige Dokumente, wie z.B. karlenförmige Personalausweise, Führerscheine oder Kreditkarten.

### Stand der Technik und Hintergrund der Erfindung

Sicherheits- und/oder Wertdokumente umfassen in vielen Fällen individualisierende (insbesondere personalisierende) Informationen auf, die eine Zuordnung des Sicherheits- und/oder Wertdokuments zu einem Aussteller, einer Gruppe von Personen oder der Person des Dokumenten-Inhabers darstellen. Als personalisierende Informationen eignen sich insbesondere Bildinformationen, beispielsweise ein Passbild, ein Fingerabdruck oder andere biometrische Merkmale, abei auch alphanumerische Zeichenfolgen, wie Namen, Adresse, Wohnori oder Geburtsdatum der Person.

Beispiele für Sicherheits- und/oder Wertdokumente sind Personalausweise, Reisepässe, Identitäts(ID)-Karten, Zugangskontrollausweise, Visa, Steuerzeichen, Tickets, Führerscheine, Kraftfahrzeugdokumente, Banknoten, Schecks, Postwertzeichen, Kreditkarten, beliebige Chipkarten und Haftetiketten (z.B. zur Produktsicherung).

Aus dem Stand der Technik sind unterschiedliche Verfahren zur Herstellung von Wert- und/oder Sicherheitsdokumenten bekannt. Beispielsweise sind in den Druckschriften US 6,022,429, US 6,264,296, US 6,685,312, US 6,932,527, US 6,979,141 und US 7,037,013 solche Verfahren beschrieben, bei denen auf Rohlinge ein Tintenstrahldruck aufgebracht wird, der mit einem Schutzlack oder einer Schutzfolie als Schutz vor mechanischen und/oder chemischen Beschädigungen sowie Manipulationen geschützt werden soll. Mit diesen Verfahren können personalisierende und/oder individualisierende Informationen farbig in dem Sicherheits- und/oder Wertdokument drucktechnisch gespeichert werden. Die sich ergebenden Sicherheits- und/oder Wertdokumente weisen jedoch nur eine relativ geringe Sicherheit gegen Manipulationen auf, weil die aufgedruckte Information vollständig relativ oberflächennah aufgedruckt ist und die Schutzschicht aus Lack oder einer Schutzfolie meist keine monolithische, stoffschlüssige Verbindung mit dem Kartenrohling ausbildet und somit ablösbar und/oder entfernbar ist. Eine anschließende Manipulation des Gedruckten ist möglich.

Aus der DE 41 34 539 A1 ist ein Aufzeichnungsträger mit farbigen Bildinformationen, der insbesondere eine Wert- oder Ausweiskarte ist, sowie ein Verfahren zur Herstellung bekannt. Die Bildinformation wird in einen Hell-/Dunkelanteil und einen Farbeinteil zerlegt. Der Hell-/Dunkelanteil, welcher für den visuellen Eindruck bestimmt ist, wird in hoch aufgelöster Form in den Aufzeichnungsträger eingebracht. Diesem Anteil wird die farbige Bildinformation kongruent überlagert, so dass ein integraler Gesamteindruck entsteht. Um die Fälschungssicherheit zu gewährleisten, wird einer der Anteile der Bildinformation in einen Kartenaufbau eingebracht. Beschrieben sind Ausführungsformen, bei denen beispielsweise die Hell-/Dunkelinformation mittels Lasergravur in eine transparente Folie eingebracht wird, die auf einem bedruckten Inlett aufgebracht ist. Auf eine auf die Folie aufgebrachte farbaufnehmende Schicht oder die transparente Folie wird der Farbanteil gedruckt. Bei einer anderen Ausführungsform wird das Inlett auf elektrofotografischem Wege mit den Farbanteilen der Bildinformation versehen. Über dem farbigen fixierten Tonerbild wird anschließend eine dünne transparente Deckfolie angeordnet, in die der Hell-/Dunkelanteil der Bildinformation mittels eines Laserstrahlschreibers eingebrannt wird. Eine weitere Ausführungsform sieht vor, dass das Inlett unter Verwendung eines herkömmlichen Verfahrens wie beispielsweise Tintenstrahldruck mit Schwarz/Weiß-Informationen versehen wird und im folgenden Schritt mit einer im Wesentlichen transparenten Kunststofffolie abgedeckt wird, die für eine Aufnahme von migrierenden Farben geeignet ist. Die farbigen Bildanteile werden mittels migrierender Farben in die Tiefe der Deckschicht eingebracht. Die Deckfolie kann hierbei zuerst mit der farbigen Bildinformation bedruckt werden. Unter Wärmeeinwirkung migriert die Farbe solange in das Innere der Deckschicht, bis durch UV-Strahlung eine Vernetzung der Deckschicht initiiert wird, die eine weitere Migration stoppt. Bei noch einer anderen Ausführungsform wird die Farbinformation zunächst in die Deckschicht eingebracht und im Anschluss daran Hell-/Dunkelinformation mit herkömmlichen Druckmethoden aufgebracht. Erneut besteht das Problem, dass die verwendete Folie, unter der oder in der ein Teil der Informationen angeordnet sind, keine monolithische Verbindung mit dem Inlett ausbildet und daher für eine Fälschung entfernt und/oder ersetzt werden kann. Bei einer Reihe der beschriebenen Ausführungsformen ist darüber hinaus ein Teil der Informationen direkt an der Oberfläche aufgebracht und einer Fälschung und/oder Manipulation besonders leicht zugänglich.

Die Druckschriften US 7,005,003 B2, EP 0 131 145 B1, US 5,734,800 und US 6,765,693 B1 beschreiben Verfahren zum Drucken farbiger Bilder mit unterschiedlichen Farbauszügen.

Insbesondere Sicherheitsdokumente werden vom Aussteller häufig als Karte ausgegeben, deren tragende Bestandteile aus Kunststoff bestehen. Polycarbonat hat sich dabei als besonders widerstandsfähig erwiesen. Derartige Dokumente sollen insbesondere vor Nachahmung geschützt werden bzw. es soll zuverlässig feststellbar sein, dass ein bestimmtes Exemplar auch tatsächlich von dem angeblichen Aussteller ausgegeben wurde.

Zur Sicherung von Dokumenten mit Bildbestandteilen, wie z.B. Passbildern oder Reproduktionen von Passbildern oder Bildern, die nicht auf den Inhaber des Dokuments, sondern auf den Dokumenttyp hinweisen (z.B. spezielle Logos), ist es bekannt, geheime Informationen in das Bild einzubringen. DE 197 06 008 A1 beschreibt z.B. ein Verfahren zur Erhöhung der Fälschungssicherheit von variablen grafischen Elementen, wie z.B. alphanumerische Zeichen, Bilder, Barcodes oder dergleichen, in Wert- und Sicherheitsdokumenten. Die Kanten oder Flächen von variablen Daten weisen danach feine Strukturen auf, deren Feinheit nur mit einem hohen technologischen Aufwand realisiert werden kann. Die mikroskopisch feinen Strukturen sind an den Originalzeichen appliziert, visuell unauffällig und unabhängig vom Betrachtungswinkel zu verifizieren.

DE 199 00 856 A1 betrifft eine Vorrichtung und ein Verfahren zum Verdecken bzw. Verbergen eines Sekundärbildes innerhalb eines Primärbildes. Gemäß der Druckschrift basieren verschiedene Reproduktions- bzw. Wiedergabetechnologien, wie z.B. eine Druck- oder Nicht-Druck(elektronische)-Technik, die zum Verteilen einer visuellen Information verwendet wird, auf dem Rastern (screening) des Bildes. Bei diesen Techniken wird das Bild in einen Satz von systematisch koordinierten Elementarpunkten, Pixeln bzw. Bildelementen etc. unterteilt, wobei ihre Größe davon unterhalb der Auflösung des menschlichen Auges liegt. Das Sekundärbild - in digitaler Form - kann zum Dekodieren durch eine Vielzahl von optischen und elektronischen Dekodern gemessen bzw. gelesen werden, welche von dem Verwender ausgewählt werden. Das primäre Bild wird gerastert. Im Allgemeinen besteht das Bild aus einer Reihe von "Druckerpunkten", welche in der Dichte abweichen, in Abhängigkeit von den Farben, welche in den verschiedenen Bestandteilen des Bildes gefunden bzw. gelesen werden. Die Elemente oder das Bild (z.B. Punkte, Pixel etc.) sind verändert bzw. modifiziert, um die Elemente des Sekundärbildes zu enthalten.

Das Dokument gemäß der vorliegenden Erfindung kann z. B. wie in den vorangehenden Absätzen beschrieben gefertigt werden, aufgebaut sein und/oder eines oder mehrere der zuvor genannten Merkmale haben.

GB 2 282 563 A1 beschreibt eine Anordnung mit zusammengesetzten Bildern für Wertdokumente. Die Anordnung weist ein Muster und ein weiteres Muster auf, das im Wesentlichen parallel zu dem ersten Muster ist, wobei die Muster jeweils eine Mehrzahl von relativ mehr und relativ weniger lichtdurchlässigen Regionen aufweisen. Die Muster sind relativ zueinander ausgerichtet. Ein zufälliges Array von Pixeln kann auf eine Oberfläche eines weißen Blattes Papier aufgedruckt sein. Die Gebiete der Pixel sind entweder schwarz oder farblos. Ferner kann ein zufälliges Array von Pixeln derselben Größe vorhanden sein. Obwohl beide Muster zufällig sind, ist Information eincodiert, sodass ein Bild entsteht, wenn die Muster sorgfältig zueinander ausgerichtet werden und im Durchlicht betrachtet werden.

DE 2 225 471 A beschreibt Kennkarten und Verfahren zur Herstellung derselben. Eine gefärbte Schicht ist auf einem Basismaterial der Karte hergestellt, die gefärbte Schicht wird graviert und erhält die Form von feinen Linien oder Punkten.

DE 4 134 539 A1 beschreibt einen Aufzeichnungsträger mit farbigen Bildinformationen. Die Bildinformation wird in einen hell/dunkel-Anteil und einen Farbanteil zerlegt. Der hell/dunkel-Anteil ist für den visuellen Eindruck bestimmend und wird in hoch aufgelöster Form in den Aufzeichnungsträger eingebracht. Diesem Anteil wird die farbige Bildinformation kongruent überlagert, sodass ein integraler Gesamteindruck entsteht.

### Aufgaben der Erfindung

Es ist eine Aufgabe der vorliegenden Erfindung, ein Verfahren zum Herstellen eines Dokuments anzugeben, das die Fälschungssicherheit erhöht. Ferner soll ein entsprechendes Dokument angegeben werden. Eine weitere Aufgabe der vorliegenden Erfindung ist es, ein Authentisierungs-Verfahren zum Feststellen, ob ein Dokument authentisch ist, und die Verwendung einer Authentisierungs-Vorrichtung anzugeben.

### Grundzüge der Erfindung und bevorzugte Ausführungsformen

Gemäß einem grundlegenden Gedanken der vorliegenden Erfindung wird bzw. ist in eine Mehrzahl von Schichten des Dokuments jeweils Bildinformation eingebracht, so dass sich die Bildinformation zu einem Gesamtbild ergänzt. Die Bildinformation zumindest in einer ersten Schicht und einer zweiten Schicht ist bzw. wird durch Digitaldruck aus Pixeln (Bildelementen) gebildet, wobei jedes der Pixel einen oder mehrere Bildpunkte aufweist. Zum Einbringen eines für die erste Schicht charakteristischen Merkmals in das Dokument ist Folgendes vorgesehen:
- Bildpunkte in der ersten Schicht weisen eine andere, für die erste Schicht charakteristische Form und/oder charakteristische Größe auf als in der zweiten Schicht und/oder
- zumindest ein Pixel in der ersten Schicht ist aus Bildpunkten anderer Form, Größe, Anordnung und/oder Anzahl zusammengesetzt als alle Pixel in der zweiten Schicht.

Insbesondere können Positionen, Formen, Größen, Anzahl und Anordnungen von einzelnen Bildpunkten und/oder Pixeln an bestimmten Stellen eines regelmäßiges Raster der gesamten Bildinformation in der ersten Schicht anders gewählt werden als in der zweiten Schicht. Beispielsweise können Bildpunkte und/oder Pixel an jeder n-ten (n ist eine positive ganze Zahl) Rasterposition in einer vorgegebenen Zeile oder Spalte oder auch in einer oder mehreren beliebigen Zeilen oder Spalten des Rasters gemäß einer vorgegebenen Vorschrift im Vergleich zu einer an den anderen Stellen des Rasters benutzten Position, Form, Größe, Anzahl und/oder Anordnungen variiert werden. Z.B. können die Mitten von Bildpunkten jedes n-ten Pixel in der Zeile und/oder Spalte um einen vorgegebenen Betrag aus der Position heraus verschoben sein, die bei einem regelmäßigen Raster für die Mitte des Pixels vorgesehen ist.

Die zuvor beschriebenen Maßnahmen führen zu einer Gestaltung und/oder Positionierung von Bildpunkten, die ein charakteristisches Merkmal lediglich für eine bestimmte Schicht, z.B. die erste Schicht, sind. Als charakteristischer Parameter dieser Schicht dient, um bei dem obigen Beispiel zu bleiben, also z. B. der Betrag, um den die Mitte des Pixels aus der Rastermitte verschoben ist, oder (bei einem anderen Beispiel) eine spezielle Form oder Größe von Bildpunkten. Alternativ oder zusätzlich kann die Richtung, in die die Pixelmitte verschoben ist. als charakteristischer Parameter genutzt werden. Ein weiterer oder alternativer charakteristischer Parameter ist (wie in dem Beispiel zuvor erwähnt) die Frequenz bzw. der Abstand der Pixel in einer Zeile und/oder Spalte voneinander, deren Mitten aus der Rastermitte verschoben sind. Es kann jedoch auch nur ein einziges Pixel variiert werden, um die Schicht zu charakterisieren.

Eine Möglichkeit, die Mitte eines Pixels lediglich für ein Pixel in einer Umgebung von Pixeln zu verschieben, ist bei einem Tintenstrahldruck die Form, Tintenmenge und/oder die Dynamik des Ausspritzens eines einzelnen Tintentropfens zur Erzeugung des Pixels zu verändern. So kann z.B. durch geeignete Modifikation eines elektrischen Steuersignals, das die Erzeugung eines bestimmten Pixels durch Ansteuerung einer Tintenstrahldüse steuert, die Richtung des ausgestoßenen Tintentropfens gesteuert werden und/oder gesteuert werden, so dass anstelle eines einzigen Tintentropfens eine kurze Folge von zwei oder mehreren Tintentropfen ausgestoßen wird. In jedem Fall ist die Mitte (z.B. definiert durch den Schwerpunkt der erzeugten Farbfläche) gegenüber einem "normalen" Steuerimpuls verändert. Z.B. bildet sich bei einer Folge von zwei durch denselben Steuerimpuls ausgelösten Tropfen ein erster, größerer Bildpunkt und ein zweiter, kleinerer Bildpunkt. Da in der Regel während des Druckens eine Relativbewegung zwischen der Tintenstrahldüse und dem Substrat stattfindet, auf das gedruckt wird, landet der zweite, kleinere Tropfen an einer anderen Stelle, die jedoch noch innerhalb des vorgesehenen Rasterelements des regelmäßigen Rasters liegen kann. Ein solcher kleinerer Bildpunkt kann dann als Satelliten-Bildpunkt bezeichnet werden. Ein ähnliches Verfahren kann auch dazu genutzt werden, spezielle Formen von Bildpunkten zu erzeugen.

Unter einem Bildpunkt wird eine durch eine Menge des jeweiligen Druckstoffes erzeugte, durchgehende farbige Fläche auf dem Substrat bezeichnet. Diese durchgehende, also nicht in separate Teilflächen unterteilte Fläche muss jedoch keine regelmäßigen äußeren Abmessungen, wie z.B. bei einem Kreis, haben. In der Praxis wird vielmehr, insbesondere bei Tintenstrahldruck, eine unregelmäßige Außenkontur erwartet, wenn das Druckbild unter dem Mikroskop betrachtet wird. Jedoch ist es heutzutage möglich, Bildpunkte mit einer Drucktechnik (insbesondere mit Tintenstrahldrucktechnik) herzustellen, die eine gewünschte Form ihrer Außenkontur haben, obwohl der gesamte Bildpunkt vom menschlichen Auge ohne technische Hilfsmittel nicht wahrgenommen werden kann. So kann z.B. mit einer Druckauflösung von 20.000 dpi (dots per inch) gedruckt werden und können einzelne Bildpunkte aus mehreren Tintentropfen erzeugt werden. So ist es daher z.B. möglich, sternförmige Bildpunkte zu erzeugen. Ferner ist es möglich, Pixel aus mehreren Bildpunkten zusammenzusetzen, die einander nicht überlappen oder aneinander anstoßen. Die Bildpunkte des Pixels befinden sich aber innerhalb eines vorgegebenen Bereichs des Druckbildes, z.B. in dem vorgesehenen Bereich eines regelmäßigen Rasters. Auch Kombinationen sind möglich, d.h. ein Pixel weist einen Bildpunkt auf, der aus einzelnen Teilflächen besteht, die aneinander angrenzen oder einander überlappen, und weist ferner zumindest einen weiteren, separaten Bildpunkt auf.

Die zuvor erwähnten Merkmale können für die erfindungsgemäße eindeutige Charakterisierung einer bestimmten Schicht der Bildinformation genutzt werden. Anders ausgedrückt wird eine bestimmte Maßnahme (die dem oben erwähnten charakteristischen Parameter entspricht) lediglich bei einer oder mehreren Schichten, nicht aber bei allen Schichten, angewendet. Eine Schicht kann also z.B. dadurch charakterisiert sein, dass sie die einzige Schicht ist, bei der eine bestimmte Maßnahme ergriffen ist. Sie kann aber auch die einzige Schicht sein, bei der eine bestimmte Maßnahme nicht ergriffen ist. Kombinationen dieser beiden Möglichkeiten sind Gegenstand von Ausgestaltungen. Z.B. kann ein erster charakteristischer Parameter (z.B. eine bestimmte Formgestaltung von Bildpunkten) und ein zweiter charakteristischer Parameter (z.B. eine bestimmte Zusammensetzung von Pixeln aus mehreren Bildpunkten) bei einer ersten Schicht vorgesehen sein. Bei einer zweiten Schicht ist ebenfalls der zweite charakteristische Parameter vorhanden, nicht aber der rste charakteristische Parameter. Zusätzlich ist aber bei der zweiten Schicht auch noch ein dritter charakteristischer Parameter (z.B. eine andere Formgestaltung von Bildpunkten) vorgesehen. Bei einer dritten Schicht ist keiner dieser drei charakteristischen Parameter vorgesehen. Daher kann jede Schicht eindeutig identifiziert werden, wenn das Druckbild mit einer Auflösung erfasst und selektiv für die einzelnen Schichten ausgewertet wird, wobei die Auflösung und Auswertung fein genug ist, um die Punktform und -größe zu bestimmen.

Mit dem Begriff "Schicht" wird ein meist ebener Bereich in einem Dokument verstanden, das in einer Richtung quer zu der Ebene bzw. Schicht durch seine Position in dem Dokument definiert ist. Z.B. erstreckt sich die Schicht bei einem marktüblichen kartenförmigen Dokument, z.B. einer Identitätskarte, in einem konstanten Abstand von der Oberfläche der Karte.

Von dem Begriff "Schicht" ist der Begriff "Substrat" zu unterscheiden. Bei einem üblichen Kartendokument z.B. werden mehrere Substrate oder Material-Lagen miteinander laminiert, so dass sie einen Materialverbund ergeben. Grundsätzlich ist es möglich, dass bereits eine einzige Lage zwei oder sogar mehr als zwei Schichten enthält, in denen sich Bildinformation für das Gesamtbild befindet. Insbesondere kann eine erste Schicht durch eine erste Oberfläche des Substrats, eine zweite Schicht durch eine zweite Oberfläche des Substrats auf der gegenüberliegenden Seite und eine dritte Schicht innerhalb des Substrats liegen. Allerdings kann es in der Praxis vorkommen, dass z.B. beim Bedrucken einer Oberfläche Druckstoffe auch in das Innere des Substrats eindringen. Daher wird eine Lage meist lediglich maximal zwei Schichten mit Bildinformationen enthalten.

Einige der im Folgenden und der zuvor beschriebenen Merkmale der Erfindung beziehen sich auf ein Herstellungsverfahren, ein in dem Herstellungsverfahren hergestelltes Dokument, auf ein Authentisierungs-Verfahren und/oder auf eine Authentisierungs-Vorrichtung. Wenn sich ein Merkmal auf mehrere solcher Kategorien bezieht, das Merkmal konkret aber nur in einer Kategorie näher beschrieben wird, trifft die Beschreibung entsprechend auch für die anderen Kategorien zu.

Insbesondere wird ein Authentisierungs-Verfahren zum Feststellen, ob ein Dokument authentisch ist, vorgeschlagen, wobei
a) jeweils in einer Mehrzahl von Schichten des Dokuments Bildinformation erfasst wird, wobei die Bildinformationen der verschiedenen Schichten Teile eines Gesamtbildes sind,
b) in der erfassten Bildinformation zumindest einer ersten Schicht und einer zweiten Schicht Pixel hinsichtlich Form und/oder Größe von Bildpunkten und/oder hinsichtlich Form, Größe, Anordnung und/oder Anzahl von Bildpunkten in dem Pixel analysiert werden, wobei jedes der Pixel einen oder mehrere Bildpunkte aufweist,
c) Folgendes auf Übereinstimmung mit einer vorgegebenen Vorschrift geprüft wird:
   - Bildpunkte mit einer charakteristischen Form und/oder charakteristischen Größe befinden sich in der ersten Schicht, nicht aber in der zweiten Schicht und/oder
   - Pixel in der ersten Schicht, die in charakteristischer Weise aus Bildpunkten vorgegebener Form, Größe, Anordnung und/oder Anzahl zusammengesetzt sind, befinden sich in der ersten Schicht, nicht aber in der zweiten Schicht,
d) aus Ergebnissen der Prüfung wird ermittelt, ob das Dokument authentisch ist oder nicht.

Insbesondere wird die vorgegebene Vorschrift von der Stelle definiert, die das Dokument ausgibt, z.B. von einer Behörde oder einem Bankenverband. Die Vorschrift kann mehrere der genannten charakteristischen Parameter und deren Zuordnung zu bestimmten Schichten enthalten.

Auch wenn in dieser Beschreibung mehrfach von einer ersten und einer zweiten Schicht oder von insgesamt drei Schichten die Rede ist, so gelten alle Ausführungen auch für eine andere Anzahl von Schichten, in denen sich Bildinformation befindet. Dabei müssen nicht alle Schichten mit Bildinformationen einen zugeordneten charakteristischen Parameter haben, auch wenn dies bevorzugt ist.

Insbesondere wenn Bildinformation in einer bestimmten Schicht durch eine helle Grundfarbe, z.B. Gelb, gebildet ist, ist es sinnvoll, die Ausgestaltung der charakteristischen Parameter auf das im konkreten Fall darzustellende Bild abzustimmen. Z.B. kann es dann sinnvoll sein, die durch die Realisierung des charakteristischen Parameters erzielte Veränderung des Druckbildes zumindest auch in Teilbereichen des Bildes vorzusehen, in denen sich in darüber und/oder darunter liegenden Schichten keine farbigen Flächen oder nur wenig Druckmittel befindet.

Ferner wird die Verwendung einer Authentisierungs-Vorrichtung zum Feststellen, ob ein Dokument authentisch ist, vorgeschlagen, wobei die Vorrichtung Folgendes aufweist:
a) eine Erfassungseinrichtung, die dazu verwendet wird, jeweils in einer Mehrzahl von Schichten des Dokuments Bildinformation zu erfassen, wobei die Bildinformation der verschiedenen Schichten sich zu einem Gesamtbild ergänzt,
b) eine Analyseeinrichtung, die dazu verwendet wird, in der erfassten Bildinformation zumindest einer ersten Schicht und einer zweiten Schicht Pixel hinsichtlich Form und/oder Größe von Bildpunkten und/oder hinsichtlich Form, Größe, Anordnung und/oder Anzahl von Bildpunkten in dem Pixel zu analysieren, wobei jedes der Pixel einen oder mehrere Bildpunkte aufweist,
c) eine Prüfungseinrichtung, die dazu verwendet wird, Folgendes auf Übereinstimmung mit einer vorgegebenen Vorschrift zu prüfen:
   ∘ Bildpunkte mit einer charakteristischen Form und/oder charakteristischen Größe befinden sich in der ersten Schicht, nicht aber in der zweiten Schicht und/oder
   ∘ Pixel in der ersten Schicht, die in charakteristischer Weise aus Bildpunkten vorgegebener Form, Größe, Anordnung und/oder Anzahl zusammengesctzt sind, befinden sich in der ersten Schicht, nicht aber in der zweiten Schicht,
d) eine Ermittlungseinrichtung, die dazu verwendet wird, aus Ergebnissen der Prüfung zu ermitteln, ob das Dokument authentisch ist oder nicht.

Da die Definition und Realisierung der charakteristischen Parameter in der Regel dazu dient, die Fälschung von Dokumenten zu erschweren, kann die Veränderung z.B. der Punktform und/oder -größe und auch die mit den anderen charakteristischen Parametern verbundene Modifikation der Bildinformation als das Einbringen oder Kodieren von geheimer Information bezeichnet werden.

In bevorzugter Ausgestaltung sind die Bildinformationen in den einzelnen Schichten des Dokuments durch jeweils eine andere Farbe dargestellt. Verwendet man in an sich bekannter Weise die Basisfarben eines Farbsystems bzw. Farbraumes (wie Rot-Grün-Blau, RGB, oder Cyan-Magenta-Gelb-Schwarz, CMYK), wird für jede der Schichten vorzugsweise höchstens eine der Basisfarben verwendet, jedenfalls soweit es ein bestimmtes Bild betrifft, das durch die Farbinformation in den einzelnen Schichten gebildet wird.

Die Zuordnung einer Farbe zu der jeweiligen Schicht erhöht die Fälschungssicherheit, da somit auch eine eindeutige Zuordnung der Bildinformation (die gegebenenfalls die zusätzlich durch Veränderung der Punktform und/oder -größe Zusatzinformation enthält) zu der jeweiligen Farbe festgelegt ist. Außerdem kann die Farbe dazu benutzt werden, selektiv die Bildinformation (und damit die Zusatzinformation) einer bestimmten Schicht zu erfassen, z.B. unter Verwendung von Farbfiltern während der optischen Erfassung.

Unter "Farben" werden bei einem bestimmten Ausführungsbeispiel der vorliegenden Erfindung auch "Grautöne" verstanden. Z.B. wird in einer ersten Schicht ein dunkler Grauton und in einer zweiten Schicht ein heller Grauton für die Bildinformation verwendet. Allerdings erschwert dies das optische Erfassen der Bildinformation selektiv in den einzelnen Schichten.

In dieser Beschreibung wird von Farben gesprochen, wenn die optische Wirkung beschrieben wird. Wird dagegen die Herstellung eines Druckbildes beschrieben, wird von Druckstoffen (z. B. Tinten) gesprochen, die die jeweilige Farbe haben.

Bei dem Gesamtbild kann es sich z. B. um ein Passbild oder ein Logo handeln. Unter einem Bild, das durch Bildinformation in mehreren Schichten gebildet wird, wird im Sinne dieser Beschreibung jedoch auch jegliche andere durch Drucken auf ein Substrat erzielbare Gestaltung verstanden. Z. B. kann Text grafisch gestaltet sein und aus mehrfarbigen Lettern gedruckt werden.

Bei dem Dokument ist bzw. wird in einer Mehrzahl von Schichten des Dokuments jeweils Bildinformation eingebracht, sodass sich die Bildinformation zu einem Gesamtbild ergänzt. Dabei sind die Positionen der Schichten vorzugsweise durch Oberflächen von verschiedenen Substraten definiert.

Z. B. wird die Gesamtbildinformation in mindestens zwei Druckauszüge zerlegt, die z. B. jeweils eine Teilinformation des Gesamtbildes enthalten. Den Druckauszügen wird außerdem noch die Zusatzinformation eingeprägt (das heißt z. B. mittels Software ein entsprechend veränderter Druckauszug berechnet). Dann werden die mindestens zwei Druckauszüge auf mindestens zwei unterschiedliche Substratoberflächen gedruckt, so dass die gedruckten Druckauszüge passgenau übereinander liegen und gemeinsam das Gesamtbild ergeben.

Z. B. können die (insbesondere schichtförmigen) Substrate durch Lamination miteinander verbunden werden. Die mindestens zwei Druckauszüge sind in diesen Fällen in mindestens zwei voneinander beabstandeten Ebenen gedruckt, nicht aber zwangsläufig auf ebenso vielen verschiedenen Substraten wie Schichten, die Bildinformation enthalten. Die vorliegende Erfindung betrifft insbesondere ein Dokument, das einen Verbund aus Polymermateriallagen aufweist, der gegebenenfalls auch Lagen aus anderen Materialien, beispielsweise aus Pappe oder Papier zusätzlich enthalten kann. Der Verbund dient insbesondere der Herstellung von Sicherheits- und/oder Wertdokumenten.

Insbesondere kann das Dokument einen Polymermateriallagenverbund aufweisen, der z. B. in transparente Schutzfolien eingeschweißt ist. Außer dem oder den Polymermaterialien können weitere Elemente und Einrichtungen Teil des Dokuments sein, z. B. ein Mikrochip und eine Antennenstruktur zum drahtlosen Auslesen des Mikrochips. Ferner können in das Polymermaterial andere Stoffe eingebracht sein, z. B. geheime Zusatzstoffe.

Die Bildinformation kann in an sich bekannter Weise auf einzelne Schichten des Dokuments, insbesondere des Polymermateriallagenverbundes, aufgedruckt worden sein bzw. aufgedruckt werden. Ein bevorzugtes Druckverfahren ist Tintenstrahldruck oder ein anderes digitales Druckverfahren, da mit dem Digitaldruck Dokumente auf einfache Weise individualisiert werden können, d. h. beispielsweise für die Person des zukünftigen Dokumenten-Inhabers personalisiert werden können (z. B. durch Aufdrucken eines Passbildes).

Grundsätzlich sind als Werkstoffe für die Polymermateriallagen z. B. alle im Bereich der Sicherheits- und/oder Wertdokumente üblichen Werkstoffe einsetzbar. Die Polymermateriallagen können, gleich oder verschieden, auf Basis eines Polymerwerkstoffes aus der Gruppe, umfassend PC (Polycarbonat, insbesondere Bisphenol A Polycarbonat), PET (Polyethylenglykolterephthalat), PMMA (Polymethylmethacrylat), TPU (Thermoplastische Polyurethan Elastomere), PE (Polyethylen), PP (Polypropylen), PI (Polyimid oder Poly-trans-Isopren), PVC (Polyvinylchlorid) und Copolymeren solcher Polymere, gebildet sein. Bevorzugt ist der Einsatz von PC-Werkstoffen, wobei beispielsweise, aber keinesfalls notwendigerweise, auch sogenannte Nieder-T_{g}-Werkstoffe einsetzbar sind, insbesondere für eine Polymermateriallage, auf welcher eine Druckschicht aufgebracht ist, und/oder für eine Polymermateriallage, welche mit einer Polymermateriallage, die eine Druckschicht trägt, verbunden ist, und zwar auf der Seite mit der Druckschicht. Nieder-T_{g}-Werkstoffe sind Polymere, deren Glastemperatur unterhalb von 140°C liegt.

Die Polymermateriallagen können gefüllt oder ungefüllt eingesetzt werden. Die gefüllten Polymermateriallagen enthalten insbesondere Farbpigmente oder andere Füllstoffe. Die Polymermateriallagen können auch mit Farbstoffen gefärbt oder farblos und in letzterem Falle transparent oder transluzent sein.

Bevorzugt ist es dabei, wenn das Grundpolymer zumindest einer der zu verbindenden Polymermateriallagen (um durch Laminierung das Dokument oder den Lagenverbund zu erhalten) gleiche oder verschiedene miteinander reaktive Gruppen enthält, wobei bei einer Laminiertemperatur von weniger als 200°C reaktive Gruppen einer ersten Polymermateriallage miteinander und/oder mit reaktiven Gruppen einer zweiten Polymermateriallage reagieren. Dadurch kann die Laminiertemperatur herabgesetzt werden, ohne dass dadurch der innige Verbund der laminierten Schichten gefährdet wird. Dies liegt im Falle verschiedener Polymermateriallagen mit reaktiven Gruppen daran, dass die verschiedenen Polymermateriallagen auf Grund der Reaktion der jeweiligen reaktiven Gruppen nicht mehr ohne weiteres delaminiert werden können. Denn zwischen den Polymermateriallagen findet eine reaktive Kopplung statt, gleichsam ein reaktives Laminieren. Des Weiteren wird wegen der niedrigeren Laminiertemperatur eine Veränderung einer Druckschicht (insbesondere eine Farbveränderung und eine Veränderung der Punktgröße und/oder -form) verhindert.

Vorteilhaft ist es dabei, wenn die Glastemperatur T_{g} der zumindest einen Polymermateriallage vor der thermischen Laminierung weniger als 120°C (oder auch weniger als 110°C oder weniger als 100°C) beträgt, wobei die Glastemperatur dieser Polymermateriallage nach der thermischen Laminierung durch Reaktion reaktiver Gruppen des Grundpolymers der Polymermateriallage miteinander um zumindest 5°C, vorzugsweise zumindest 20°C, höher als die Glastemperatur vor der thermischen Laminierung ist. Hierbei erfolgt nicht nur eine reaktive Kopplung der miteinander zu laminierenden Schichten. Vielmehr werden das Molekulargewicht und somit die Glastemperatur durch Vernetzung des Polymers innerhalb der Schicht und zwischen den Schichten erhöht. Dies erschwert ein Delaminieren zusätzlich, da beispielsweise die Drucktinten insbesondere bei einem Manipulationsversuch durch die hohen notwendigen Delaminationstemperaturen irreversibel beschädigt werden und das Dokument dadurch zerstört wird. Vorzugsweise beträgt die Laminiertemperatur beim Einsatz solcher Polymerwerkstoffe weniger als 180°C, besser noch weniger als 150°C. Die Auswahl der geeigneten reaktiven Gruppen ist für einen Fachmann auf dem Gebiet der Polymerchemie ohne Probleme möglich. Beispielhafte reaktive Gruppen sind ausgewählt aus der Gruppe, umfassend -CN, -OCN, -NCO, -NC, -SH, -Sₓ, -Tos, -SCN, -NCS, -H, -Epoxy (-CHOCH₂),-NH₂, -NN⁺, -NN-R, -OH, -COOH, -CHO, -COOR, -Hal (-F, -Cl, -Br, -I), -Me-Hal (Me = zumindest zweiwertiges Metall, beispielsweise Mg), -Si(OR)₃, -SiHaI₃, -CH=CH₂, und-COR", wobei R" eine beliebige reaktive oder nicht-reaktive Gruppe sein kann, beispielsweise H, Hal, C₁-C₂₀-Alkyl, C₃-C₂₀-Aryl, C₄-C₂₀-ArAlkyl, jeweils verzweigt oder linear, gesättigt oder ungesättigt, optional substituiert, oder korrespondierende Heterocyclen mit einem oder mehreren gleichen oder verschiedenen Heteroatomen N, O, oder S. Andere reaktive Gruppen sind selbstverständlich möglich. Hierzu gehören die Reaktionspartner der Diels-Alder Reaktion oder einer Metathese.

Die reaktiven Gruppen können direkt an dem Grundpolymer gebunden oder über eine Spacergruppe mit dem Grundpolymer verbunden sein. Als Spacergruppen kommen alle dem Fachmann für Polymerchemie bekannten Spacergruppen in Frage. Dabei können die Spacergruppen auch Oligomere oder Polymere sein, welche Elastizität vermitteln, wodurch eine Bruchgefahr des Sicherheits- und/oder Wertdokuments reduziert wird. Solche elastizitätsvermittelnden Spacergruppen sind dem Fachmann bekannt und brauchen daher hier nicht weiter beschrieben zu werden. Lediglich beispielhaft seien Spacergruppen genannt, welche ausgewählt sind aus der Gruppe, umfassend -(CH₂)ₙ-,-(CH₂-CH₂-O)ₙ-, -(SiR₂-O)ₙ-, -(C₆H₄)ₙ-, -(C₆H₁₀)ₙ-, C₁-Cₙ-Alkylen-, -C₃-C₍ₙ₊₃₎-Arylen-, -C₄-C₍ₙ₊₄₎-ArAlkylen-, jeweils verzweigt oder linear, gesättigt oder ungesättigt, optional substituiert, oder korrespondierenden Heterocyclen mit einem oder mehreren, gleichen oder verschiedenen Heteroatomen O, N, oder S, wobei n = 1 bis 20, vorzugsweise 1 bis 10. Bezüglich weiterer reaktiver Gruppen oder Möglichkeiten der Modifikation wird auf die Literaturstelle "Ullmann's Encyclopaedia of Industrial Chemistry", Wiley Verlag, elektronische Ausgabe 2006, verwiesen. Der Begriff des Grundpolymers bezeichnet im Rahmen der vorstehenden Ausführungen eine Polymerstruktur, welche keine unter den eingesetzten Laminierbedingungen reaktiven Gruppen trägt. Es kann sich dabei um Homopolymere oder Copolymere handeln. Gegenüber den genannten Polymeren sind auch modifizierte Polymere umfasst.

Es ist vorteilhaft, wenn die jeweiligen Schichten in einem Polymermateriallagenverbund auf innen liegenden Schichten des Verbundes angeordnet sind, d. h. Schichten, die nicht die Oberfläche des Schichtenverbundes bilden. In diesem Falle ist eine Fälschung oder Verfälschung von als Sicherheitsmerkmalen dienenden Druckschichten erschwert oder sogar ausgeschlossen. Dies ist auch für den unveränderten Erhalt der Information von Vorteil, die erfindungsgemäß z. B. durch Variation von Punktgröße und/oder Punktform in einer Mehrzahl der Schichten des Dokuments kodiert wird.

Allerdings besteht in diesem Falle das Problem, dass herkömmliche kartenförmige Datenträger durch Manipulation relativ leicht delaminiert werden können. Für den Fall, dass durch drucktechnische Verfahren auf einer innen liegenden Schicht des Lagenverbundes ein Sicherheitsmerkmal (z. B. die erfindungsgemäße Kodierung von geheimer Information in einer Mehrzahl der Schichten des Dokuments z. B. durch Variation von Punktgröße und/oder Punktform) aufgebracht ist, kann dadurch gelöst werden, dass die Druckstoffe Bindemittel enthalten, die zumindest im Wesentlichen aus demselben Polymer bestehen wie das Material der Lagen des Lagenverbundes. In diesem Falle wird die Gefahr von Delaminationen praktisch ausgeschlossen, weil sich beim Laminieren ein monolithischer Verbund der einzelnen Lagen bildet. Besonders bevorzugt ist es, wenn die Druckstoffe Bindemittel auf Polycarbonatbasis enthalten, wenn zumindest einige der Lagen des Verbundes ebenfalls aus Polycarbonat bestehen. In letzterem Falle werden die Druckstoffe auf innen liegenden Lagen des Lagenverbundes gedruckt, wobei insbesondere alle an die Druckschichten angrenzenden Lagen des Lagenverbundes aus Polycarbonat gebildet sind.

Für den Druck auf Polycarbonat-Verbundlagen sind grundsätzlich alle fachüblichen Tinten einsetzbar. Bevorzugt ist die Verwendung einer Zubereitung, enthaltend: A) 0,1 bis 20 Gew.-% eines Bindemittels mit einem Polycarbonatderivat, B) 30 bis 99,9 Gew.-% eines vorzugsweise organischen Lösungsmittels oder Lösungsmittelgemischs, C) 0 bis 10 Gew.-% eines Farbmittels oder Farbmittelgemischs (Gew.-% bezogen auf dessen Trockenmasse), D) 0 bis 10 Gew.-% eines funktionalen Materials oder einer Mischung funktionaler Materialien, E) 0 bis 30 Gew.-% Additive und/oder Hilfsstoffe, oder einer Mischung solcher Stoffe, wobei die Summe der Komponenten A) bis E) stets 100 Gew.-% ergibt, als Drucktinte. Solche Polycarbonatderivate sind hochkompatibel mit Polycarbonatwerkstoffen, insbesondere mit Polycarbonaten auf Basis Bisphenol A, wie beispielsweise Makrofol® Folien. Zudem ist das eingesetzte Polycarbonatderivat hochtemperaturstabil und zeigt keinerlei Verfärbungen bei laminationstypischen Temperaturen bis zu 200°C und mehr, wodurch auch der Einsatz der vorstehend beschriebenen Nieder-Tg-Werkstoffe nicht notwendig ist. Im Einzelnen kann das Polycarbonatderivat funktionelle Carbonatstruktureinheiten der Formel (I) enthalten, 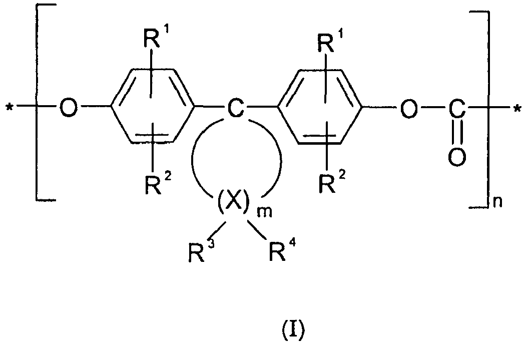 worin R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl, sind; m eine ganze Zahl von 4 bis 7, bevorzugt 4 oder 5 ist; R³ und R⁴ für jedes X individuell wählbar, unabhängig voneinander Wasserstoff oder C₁-C₆-Alkyl ist; X Kohlenstoff und n eine ganze Zahl größer 20 bedeuten, mit der Maßgabe, dass an mindestens einem Atom X, R³ und R⁴ gleichzeitig Alkyl bedeuten. Bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in *α*-Stellung zu dem Diphenyl-substituierten C-Atom (C1) können nicht dialkylsubstituiert sein. Die X-Atome in *β*-Stellung zu C1 können mit Alkyl disubstituiert sein. Bevorzugt ist m = 4 oder 5. Das Polycarbonatderivat kann beispielsweise auf Basis von Monomeren, wie 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol, gebildet sein. Ein solches Polycarbonatderivat kann beispielsweise gemäß der Literaturstelle DE-A 38 32 396 aus Diphenolen der Formel (Ia) hergestellt werden, deren Offenbarungsgehalt hiermit vollumfänglich in den Offenbarungsgehalt dieser Beschreibung aufgenommen wird. Es können sowohl ein Diphenol der Formel (Ia) unter Bildung von Homopolycarbonaten als auch mehrere Diphenole der Formel (Ia) unter Bildung von Copolycarbonaten verwendet werden (Bedeutung von Resten, Gruppen und Parametern, wie in Formel I).

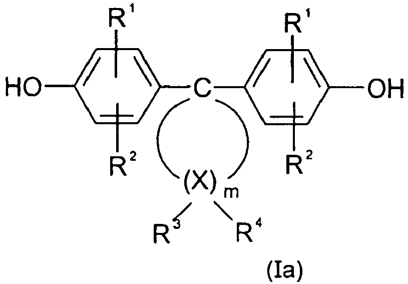

Außerdem können die Diphenole der Formel (Ia) auch im Gemisch mit anderen Diphenolen, beispielsweise mit denen der Formel (Ib)

HO-Z-OH (Ib),

zur Herstellung von hochmolekularen, thermoplastischen, aromatischen Polycarbonatderivaten verwendet werden.

Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann. Beispiele der Diphenole der Formel (Ib) sind Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, *α*,*α*'-Bis-(hydroxyphenyl)-diisopropylbenzole sowie deren kernalkylierte und kernhalogenierte Verbindungen. Diese und weitere geeignete Diphenole sind beispielsweise in US-A 3,028,365, US-A 2,999,835, US-A 3,148,172, US-A 3,275,601, US-A 2,991,273, US-A 3,271,367, US-A 3,062,781, US-A 2,970,131, US-A 2,999,846, DE-A 1 570 703, DE-A 2 063 050, DE-A 2 063 052, DE-A 2 211 956, FR-A 1 561 518 und in H. Schnell in: "Chemistry and Physics of Polycarbonates", Interscience Publishers, New York 1964, beschrieben, deren Offenbarungsgehalt hiermit vollumfänglich in den Offenbarungsgehalt der vorliegenden Beschreibung aufgenommen werden. Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, *α*,*α*-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, *α*,*α*-Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan. Besonders bevorzugte Diphenole der Formel (Ib) sind beispielsweise 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden. Das molare Verhältnis von Diphenolen der Formel (Ia) zu den gegebenenfalls mit zu verwendenden anderen Diphenolen der Formel (Ib), soll zwischen 100 Mol-% (Ia) zu 0 Mol-% (Ib) und 2 Mol-% (Ia) zu 98 Mol-% (Ib), vorzugsweise zwischen 100 Mol-% (Ia) zu 0 Mol-% (Ib) und 10 Mol-% (Ia) zu 90 Mol-% (Ib) und insbesondere zwischen 100 Mol-% (Ia) zu 0 Mol-% (Ib) und 30 Mol-% (Ia) zu 70 Mol-% (Ib) liegen. Die hochmolekularen Polycarbonatderivate aus den Diphenolen der Formel (Ia), gegebenenfalls in Kombination mit anderen Diphenoien, können nach den bekannten Polycarbonat-Herstellungsverfahren hergestellt werden. Dabei können die verschiedenen Diphenole sowohl statistisch als auch blockweise miteinander verknüpft sein. Die eingesetzten Polycarbonatderivate können in an sich bekannter Weise verzweigt sein. Wenn die Verzweigung gewünscht wird, kann diese in bekannter Weise durch Einkondensieren geringer Mengen, vorzugsweise von Mengen von 0,05 bis 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind Phloroglucin, 4,8-Dimethyl-2,4,6-tri-(4-hydroxyphenyl)-hepten-2,4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Als Kettenabbrecher zur an sich bekannten Regelung des Molekulargewichts der Polycarbonatderivate dienen monofunktionelle Verbindungen in üblichen Konzentraten. Geeignete Verbindungen sind z.B. Phenol, tert-Butylphenole oder andere Alkyl-substituierte Phenole. Zur Regelung des Molekulargewichts sind insbesondere kleine Mengen Phenole der Formel (Ic) geeignet 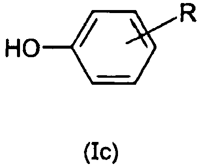 worin R einen verzweigten C₈- und/oder C₉-Alkylrest darstellt. Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt. Die Polycarbonatderivate können vorzugsweise nach dem Phasengrenzflächenverhalten (vgl. H.Schnell in: Chemistry and Physics of Polycarbonates, Polymer Reviews, Vol. IX, Seite 33ff., Interscience Publ. 1964) in an sich bekannter Weise hergestellt werden. Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ib), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt im Bereich von 0°C bis 40°C. Die gegebenenfalls mit verwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlorkohlensäureester mit verwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden. Geeignete organische Lösungsmittel für die Kettenabbr cher sowie gegebenenfalls für die Verzweiger und die Chlorkohlensäureester sind beispielsweise Methylenchlorid, Chlorbenzol sowie insbesondere Mischungen aus Methyl nchlorid und Chlorbenzol. Gegebenenfalls können die verwendeten Kettenabbrecher und Verzweiger im gleichen Solvens gelöst werden. Als organische Phase für die Phasengrenzflächenpolykondensation dienen beispielsweise Methylenchlorid, Chlorbenzol sowie Mischungen aus Methylenchlorid und Chlorbenzol. Als wässrige alkalische Phase dient beispielsweise NaOH-Lösung. Die Herstellung der Polycarbonatderivate nach dem Phasengrenzflächenverfahren kann in üblicher Weise durch Katalysatoren, wie tertiäre Amine, insbesondere tertiäre aliphatische Amine, wie Tributylamin oder Triethylamin, katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden. Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden. Die Polycarbonatderivate können linear oder verzweigt sein, sie sind Homopolycarbonate oder Copolycarbonate auf Basis der Diphenole der Formel (Ia). Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonatderivaten enthalten. Das Polycarbonatderivat kann ein Copolymer sein, enthaltend, insbesondere hieraus bestehend, Monomereinheiten M1 auf Basis der Formel (Ib),vorzugsweise Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, wobei das Molverhältnis M2/M1 vorzugsweise größer als 0,3, insbesondere größer als 0,4, beispielsweise größer als 0,5 ist. Bevorzugt ist es, wenn das Polycarbonatderivat ein mittleres Molekulargewicht (Gewichtsmittel) von mindestens 10.000, vorzugsweise von 20.000 bis 300.000, aufweist.

Die Komponente B kann grundsätzlich im Wesentlichen organisch oder wässrig sein. Im Wesentlichen wässrig bedeutet dabei, dass bis zu 20 Gew.-% der Komponente B) organische Lösungsmittel sein können. Im Wesentlichen organisch bedeutet, dass bis zu 5 Gew.-% Wasser in der Komponente B) vorliegen können. Vorzugsweise enthält die Komponente B einen bzw. besteht aus einem flüssigen aliphatischen, cycloaliphatischen und/oder aromatischen Kohlenwasserstoff, einem flüssigen organischen Ester und/oder einer Mischung solcher Substanzen. Die eingesetzten organischen Lösungsmittel sind vorzugsweise halogenfreie organische Lösungsmittel. In Frage kommen insbesondere aliphatische, cycloaliphatische, aromatische Kohlenwasserstoffe, wie Mesityl n, 1,2,4-Trimethylbenzol, Cumol und Solvent Naptha, Toluol, Xylol; (organische) Ester, wie Methylacetat, Ethylacetat, Butylacetat, Methoxypropylacetat, Ethyl-3-ethoxypropionat. Bevorzugt sind Mesitylen, 1,2,4-Trimethylbenzol, Cumol und Solvent Naptha, Toluol, Xylol, Essigsäuremethylester, Essigsäureethylester, Methoxypropylacetat. Ethyl-3-ethoxy-propionat. Ganz besonders bevorzugt sind Mesitylen (1,3.5-Trimethylbenzol), 1,2,4-Trimethylbenzol, Cumol (2-Phenylpropan), Solvent Naptha und Ethyl-3-ethoxypropionat. Ein geeignetes Lösungsmittelgemisch umfasst beispielsweise L1) 0 bis 10 Gew.-%, vorzugsweise 1 bis 5 Gew.-%, insbesondere 2 bis 3 Gew.-%, Mesitylen, L2) 10 bis 50 Gew.-%, vorzugsweise 25 bis 50 Gew.-%, insbesondere 30 bis 40 Gew.-%, 1-Methoxy-2-propanolacetat, L3) 0 bis 20 Gew.-%, vorzugsweise 1 bis 20 Gew.-%, insbesondere 7 bis 15 Gew.-%, 1,2,4-Trimethylbenzol, L4) 10 bis 50 Gew.-%, vorzugsweise 25 bis 50 Gew.-%, insbesondere 30 bis 40 Gew.-%, Ethyl-3-ethoxypropionat, L5) 0 bis 10 Gew.-%, vorzugsweise 0,01 bis 2 Gew.-%, insbesondere 0,05 bis 0,5 Gew.-%, Cumol, und L6) 0 bis 80 Gew.-%, vorzugsweise 1 bis 40 Gew.-%, insbesondere 15 bis 25 Gew.-%, Solvent Naphtha, wobei die Summe der Komponenten L1 bis L6 stets 100 Gew.-% ergibt.

Die Zubereitung kann im Detail enthalten: A) 0,1 bis 10 Gew.-%, insbesondere 0,5 bis 5 Gew.-%, eines Bindemittels mit einem Polycarbonatderivat auf Basis eines geminal disubstituierten Dihydroxydiphenylcycloalkans, B) 40 bis 99,9 Gew.-%, insbesondere 45 bis 99,5 Gew.-%, eines organischen Lösungsmittels oder Lösungsmittelgemischs, C) 0,1 bis 6 Gew.-%, insbesondere 0,5 bis 4 Gew.-%, eines Farbmittels oder Farbmittelgemischs, D) 0,001 bis 6 Gew.-%, insbesondere 0,1 bis 4 Gew.-%, eines funktionalen Materials oder einer Mischung funktionaler Materialien, E) 0,1 bis 30 Gew.-%, insbesondere 1 bis 20 Gew.-%, Additive und/oder Hilfsstoffe, oder eine Mischung solcher Stoffe.

Als Komponente C, sofern ein Farbmittel vorgesehen sein soll, kommt grundsätzlich jedes beliebige Farbmittel oder Farbmittelgemisch in Frage. Unter Farbmittel sind alle farbgebenden Stoffe bezeichnet. Das bedeutet, es kann sich sowohl um Farbstoffe (einen Überblick über Farbstoffe gibt Ullmann's Encyclopedia of Industrial Chemistry, Electronic Release 2007, Wiley Verlag, Kapitel "Dyes, General Survey") wie auch um Pigmente (einen Überblick über organische wie anorganische Pigmente gibt Ullmann's Encyclopedia of Industrial Chemistry, Electronic Release 2007, Wiley Verlag, Kapit I "Pigments, Organic" bzw. "Pigments, Inorganic") handeln. Farbstoffe sollten in den Lösungsmitteln der Komponente B löslich bzw. (stabil) dispergierbar oder suspendi rbar sein. Des Weiteren ist es vorteilhaft, wenn das Farbmittel bei Temperaturen von 160°C und mehr für einen Zeitraum von mehr als 5 min. stabil, insbesondere farbstabil, ist. Es ist auch möglich, dass das Farbmittel einer vorgegebenen und reproduzierbaren Farbveränderung unter den Verarbeitungsbedingungen unterworfen ist und entsprechend ausgewählt wird. Pigmente müssen neben der Temperaturstabilität insbesondere in feinster Partikelgrößenverteilung vorliegen. Für einen Tintenstrahldruck bedeutet dies in der Praxis, dass die Teilchengröße nicht über 1,0 µm hinausgehen sollte, da sonst Verstopfungen im Druckkopf die Folge sind. In der Regel haben sich nanoskalige Festkörperpigmente und gelöste Farbstoffe bewährt. Die Farbmittel können kationisch, anionisch oder auch neutral sein. Lediglich als Beispiele für im Tintenstrahldruck verwendbare Farbmittel seien genannt: Brillantschwarz C.I. Nr. 28440, Chromogenschwarz C.I. Nr. 14645, Direkttiefschwarz E C.I. Nr. 30235, Echtschwarzsalz B C.I. Nr. 37245, Echtschwarzsalz K C.I. Nr. 37190, Sudanschwarz HB C.I. 26150, Naphtolschwarz C.I. Nr. 20470, Bayscript® Schwarz flüssig, C.I. Basic Black 11, C.I. Basic Blue 154, Cartasol® Türkis K-ZL flüssig, Cartasol® Türkis K-RL flüssig (C.I. Basic Blue 140), Cartasol Blau K5R flüssig. Geeignet sind des Weiteren z.B. die im Handel erhältlichen Farbstoffe Hostafine® Schwarz TS flüssig (vertrieben von Clariant GmbH Deutschland), Bayscript® Schwarz flüssig (C.I.-Gemisch, vertrieben von Bayer AG Deutschland), Cartasol® Schwarz MG flüssig (C.I. Basic Black 11, Eingetragenes Markenzeichen der Clariant GmbH Deutschland), Flexonylschwarz® PR 100 (E C.I. Nr. 30235, vertrieben von Hoechst AG), Rhodamin B, Cartasol® Orange K3 GL, Cartasol® Gelb K4 GL, Cartasol® K GL, oder Cartasol® Rot K-3B. Des Weiteren können als lösliche Farbmittel Anthrachinon-, Azo-, Chinophthalon-, Cumarin-, Methin-, Perinon-, und/oder Pyrazolfarbstoffe, z.B. unter dem Markennamen Macrolex® erhältlich, Verwendung finden. Weitere geeignete Farbmittel sind in der Literaturstelle Ullmann's Encyclopedia of Industrial Chemistry, Electronic Release 2007, Wiley Verlag, Kapitel "Colorants Used in Ink Jet Inks" beschrieben. Gut lösliche Farbmittel führen zu einer optimalen Integration in die Matrix bzw. das Bindemittel der Druckschicht. Die Farbmittel können entweder direkt als Farbstoff bzw. Pigment zugesetzt werden oder als Paste, einem Gemisch aus Farbstoff und Pigment zusammen mit einem weiteren Bindemittel. Dieses zusätzliche Bindemittel sollte chemisch kompatibel mit den weiteren Komponenten der Zubereitung sein. Sofern eine solche Paste als Farbmittel eingesetzt wird, bezieht sich die Mengenangabe der Komponente B auf das Farbmittel ohne die sonstigen Komponenten der Paste. Diese sonstigen Komponenten der Paste sind dann unter die Komponente E zu subsumieren. Bei Verwendung von so g nannten Buntpigmenten in den Skalenfarben Cyan-Magenta-Yellow und bevorzugt auch (Ruß)-Schwarz sind Volltonfarbabbildung n möglich.

Die Komponente D umfasst Substanzen, die unter Einsatz von technischen Hilfsmitteln unmittelbar durch das menschliche Auge oder durch Verwendung von geeigneten Detektoren ersichtlich sind. Hier sind die dem Fachmann einschlägig bekannten Materialien (vgl. auch van Renesse in: "Optical document security", 3rd Ed., Artech House, 2005) gemeint, die zur Absicherung von Wert und Sicherheitsdokumenten eingesetzt werden. Dazu zählen Lumineszenzstoffe (Farbstoffe oder Pigmente, organisch oder anorganisch) wie z.B. Photoluminophore, Elektroluminophore, Antistokes Luminophore, Fluorophore aber auch magnetisierbare, photoakustisch adressierbare oder piezoelektrische Materialien. Des Weiteren können Raman-aktive oder Ramanverstärkende Materialien eingesetzt werden, ebenso wie so genannte Barcode-Materialien. Auch hier gelten als bevorzugte Kriterien entweder die Löslichkeit in der Komponente B oder bei pigmentierten Systemen Teilchengrößen < 1 µm sowie eine Temperaturstabilität für Temperaturen > 160°C im Sinne der Ausführungen zur Komponente C. Funktionale Materialien können direkt zugegeben werden oder über eine Paste, d.h. einem Gemisch mit einem weiteren Bindemittel, welches dann Bestandteil der Komponente E bildet, oder dem eingesetzten Bindemittel der Komponente A.

Die Komponente E umfasst bei Tinten für einen Tintenstrahldruck üblicherweise eingerichtete Stoffe wie Antischaummittel, Stellmittel, Netzmittel, Tenside, Fließmittel, Trockner, Katalysatoren, (Licht-) Stabilisatoren, Konservierungsmittel, Biozide, Tenside, organische Polymere zur Viskositätseinstellung, Puffersysteme, etc. Als Stellmittel kommen fachübliche Stellsalze in Frage. Ein Beispiel hierfür ist Natriumlactat. Als Biozide kommen alle handelsüblichen Konservierungsmittel, welche für Tinten verwendet werden, in Frage. Beispiele hierfür sind Proxel®GXL und Parmetol® A26. Als Tenside kommen alle handelsüblichen Tenside, welche für Tinten verwendet werden, in Frage. Bevorzugt sind amphotere oder nichtionische Tenside. Selbstverständlich ist aber auch der Einsatz spezieller anionischer oder kationischer Tenside, welche die Eigenschaften des Farbstoffs nicht verändern, möglich. Beispiele für geeignete Tenside sind Betaine, ethoxilierte Diole usw. Beispiele sind die Produktreihen Surfynol® und Tergitol®. Die Menge an Tensiden wird insbesondere bei Anwendung für den Tintenstrahldruck beispielsweise mit der Maßgabe gewählt, dass die Oberflächenspannung der Tinte im Bereich von 10 bis 60 mN/m, vorzugsweise 20 bis 45 mN/m, gemessen bei 25°C, liegt. Es kann ein Puffersystem eingerichtet sein, welches den pH-Wert im Bereich von 2,5 bis 8,5, insbesondere im Bereich von 5 bis 8, stabilisiert. Geeignete Puffersysteme sind Lithiumacetat, Boratpuffer, Triethanolamin oder Essigsäure/Natriumacetat. Ein Puffersystem wird insbesondere im Falle einer im Wesentlichen wässrigen Komponente B in Frage kommen. Zur Einstellung der Viskosität der Tinte können (ggf. wasserlösliche) Polymere vorgesehen sein. Hier kommen alle für übliche Tintenformulierungen geeigneten Polymere in Frage. Beispiele sind wasserlösliche Stärke, insbesondere mit einem mittleren Molekulargewicht von 3.000 bis 7.000, Polyvinylpyrrolidon, insbesondere mit einem mittleren Molekulargewicht von 25.000 bis 250.000, Polyvinylalkohol, insbesondere mit einem mittleren Molekulargewicht von 10.000 bis 20.000, XanthanGummi, Carboxy-Methylcellulose, Ethylenoxid/Propylenoxid-Blockcopolymer, insbesondere mit einem mittleren Molekulargewicht von 1.000 bis 8.000. Ein Beispiel für das letztgenannte Blockcopolymer ist die Produktreihe Pluronic®. Der Anteil an Biozid, bezogen auf die Gesamtmenge an Tinte, kann im Bereich von 0 bis 0,5 Gew-%, vorzugsweise 0,1 bis 0,3 Gew.-%, liegen. Der Anteil an Tensid, bezogen auf die Gesamtmenge an Tinte, kann im Bereich von 0 bis 0,2 Gew.-% liegen. Der Anteil an Stellmitteln kann, bezogen auf die Gesamtmenge an Tinte, 0 bis 1 Gew.-%, vorzugsweise 0,1 bis 0,5 Gew.-%, betragen. Zu den Hilfsmitteln werden auch sonstige Komponenten gezählt, wie beispielsweise Essigsäure, Ameisensäure oder n-Methyl-Pyrolidon oder sonstige Polymere aus der eingesetzten Farbstofflösung oder -Paste. Bezüglich Substanzen, welche als Komponente E geeignet sind, wird ergänzend beispielsweise auf Ullmann's Encyclopedia of Chemical Industry, Electronic Release 2007, Wiley Verlag, Kapitel "Paints and Coatings", Sektion "Paint Additives", verwiesen.

Die vorstehend beschriebene Tintenzusammensetzung ist insbesondere für den Tintenstrahldruck geeignet, kann aber auch für beliebige andere Drucktechniken eingesetzt werden, sofern das Verhältnis der einzelnen Komponenten an die Anwendung angepasst wird. Wesentlich in diesem Zusammenhang ist, dass die beschriebene Zusammensetzung als Bindemittel ein Polycarbonatderivat enthält, wenn die Polymermateriallagen des Verbundes ebenfalls aus Polycarbonat bestehen.

Ausführungsbeispiele der Erfindung werden nun unter Bezugnahme auf die beigefügte Zeichnung beschrieben. Die einzelnen Figuren der Zeichnung zeigen:
- Fig. 1: Lagen eines Dokuments in Explosionsdarstellung von der Seite,
- Fig. 2: Lagen eines Dokuments in perspektivischer Explosionsdarstellung,
- Fig. 3: vier verschiedene Pixelgrößen und -zusammensetzungen, die für die Darstellung von Druckinformationen in derselben Schicht eines Dokuments verwendet werden können,
- Fig. 4: ein Pixel, das aus drei verschiedenen, einander teilweise überlapp nden Bereichen zusammengesetzt ist,
- Fig. 5: ein Pixel, das aus mehreren Bildpunkten verschiedener Größe zusammengesetzt ist,
- Fig. 6: ein Pixel, das aus einem Bildpunkt und einem Satelliten-Bildpunkt gebildet ist,
- Fig. 7: ein Bildpunkt, der Rautenform hat,
- Fig. 8: zwei Schichten eines Dokuments, deren Pixel unterschiedliche Anordnungen von farbigen Flächen aufweisen.

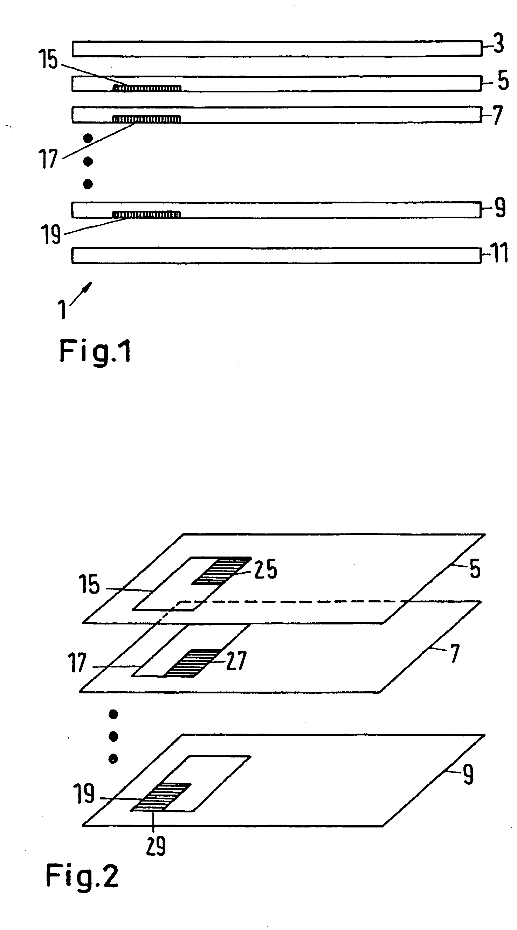

Fig. 1 zeigt fünf Lagen 3, 5, 7, 9, 11 eines Dokuments 1 in Explosionsdarstellung von der Seite, d.h. die oberste Lage 3 und die unterste Lage 11 bilden die Außenoberflächen des Dokuments 1. Die Darstellung kann auch als Darstellung eines Zwischenschritts bei der Herstellung des Dokuments 1 verstanden werden. In diesem Fall zeigt Fig. 1 den Zustand unmittelbar vor dem Laminieren der Lagen 3-11.

Drei innen liegende Lagen 5, 7, 9 des Dokuments 1 weisen jeweils einen Teilbereich 15, 17, 19 an ihrer unteren Oberfläche auf. In diesen Teilbereichen 15, 17, 19 ist jeweils Bildinformation in Form eines Druckbildes, vorzugsweise eines Tintenstrahl-Druckbildes, aufgedruckt. Bevorzugtermaßen ist jedes der Druckbilder in einer einzigen Basis-Farbe eines Mehrkomponenten-Farbsystems ausgeführt, z.B. RGB oder CMYK. Wie durch drei untereinander angeordnete Punkte links in Fig. 1 dargestellt ist, die sich zwischen der Lage 7 und der Lage 9 befinden, kann das Dokument noch weitere Lagen aufweisen, die ebenfalls in Teilbereichen bedruckt sein können, z.B. mit der fehlenden vierten Farbe des CMYK-Farbraumes.

Die bedruckten Teilbereiche 15, 17, 19 sind so in den Lagen 5, 7, 9 positioniert und werden vor dem Laminieren so passgenau aneinander angeordnet, dass die Druckbilder in den Teilbereichen 15, 17, 19 bei Betrachtung der Außenoberfläche (von unten und/oder von oben) des Dokuments 1 ein Gesamtbild ergeben. Im Fall der erwähnten Farbsysteme ist das Gesamtbild daher im Allgemeinen mehrfarbig.

Zumindest zwei der Teilbereiche 15, 17, 19 enthalten jeweils geheime Zusatzinformation in dem Druckbild. Dabei ist die Zusatzinformation vorzugsweise als Information ausgeführt, die für einen Betrachter nicht oder nur mit technischen Hilfsmitteln wahrnehmbar ist.

Bei den in Fig. 2 dargestellten Lagen 5, 7, 9 kann es sich z.B. um die Lagen des Dokuments 1 gemäß Fig. 1 handeln. Diese Lagen weisen wiederum einen Teilbereich 15, 17, 19 auf, der mit Bildinformation bedruckt ist. In dem hier dargestellten Ausführungsbeispiel weist jeder der Bereiche 15, 17, 19 einen Teilbereich 25, 27, 29 auf, der die Zusatzinformation enthält. Außerhalb dieser Teilbereiche 25, 27, 29 befindet sich zwar ebenfalls Bildinformation, jedoch ohne Aufprägung von Zusatzinformation, wi sie in den Teilbereichen 25, 27, 29 durch Bearbeitung der ursprünglichen Bildinformation eingebracht ist. Wie Fig. 2 ebenfalls zeigt, liegen diese Teilbereiche 25, 27, 29 nach dem passgenauen Laminieren der Lagen 5, 7, 9 nicht übereinander. Selbst wenn der unkundige Betrachter oder potentielle Fälscher die Zusatzinformation erkennen sollte, wenn er die Oberfläche des Dokuments 1 betrachtet, kann er nicht erkennen, dass die Gesamt-Wasserzeicheninformation über die drei Schichten der Lagen 5, 7, 9 verteilt ist. Z.B. bei einer Dicke der Lagen 5, 7, 9 von etwa 50 µm ist es ohne Vorkenntnisse (z.B. über die Zuordnung der Farben zu den Schichten) nicht möglich zu erkennen, dass die Wasserzeicheninformation über die Schichten verteilt ist. Entsprechendes gilt selbstverständlich auch für den Fall, dass Zusatzinformation in verschiedenen Schichten so angeordnet ist, dass sie übereinander liegt. Z.B. könnten sich die Teilbereiche 25, 27, 29 ganz oder teilweise überlappen, wobei der Begriff des Überlappens davon ausgeht, dass die Bereiche 15, 17, 19 in der Darstellung von Fig. 2 von oben oder unten betrachtet werden. Selbstverständlich kann die Zusatzinformation auch in jeder der Schichten über den gesamten Bereich 15, 17, 19 verteilt sein.

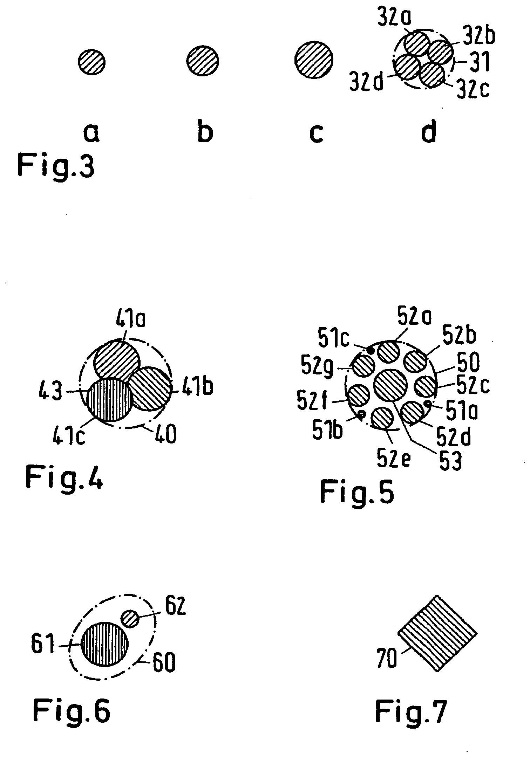

Fig. 3 zeigt eine erste Ausführungsform zur Einbringung von Zusatzinformation zur Realisierung vorgegebener charakteristischer Parameter in eine Schicht und damit zur Charakterisierung der Schicht. Das Druckbild in der Schicht wird, wie es allgemein beim digitalen Farbdruck üblich ist, durch Variation der Punktgröße der einzelnen Pixel realisiert. Üblicherweise wird die Fläche, die bei einem Pixel tatsächlich von farbigem Druckstoff bedeckt ist, variiert, je nachdem, ob eine höhere oder niedrigere Farbintensität in dem Bereich des Pixels erzielt werden soll. Z.B. stehen für das hier beschriebene vereinfachte Beispiel lediglich fünf verschiedene Intensitäten zur Darstellung eines einzelnen Pixels zur Verfügung. Die erste Intensität ist Null, d.h. innerhalb eines für das Pixel vorgesehenen Bildrasterbereichs wird die Farbe nicht gedruckt. Die nächste Intensität wird durch den mit a bezeichneten kleinsten Bildpunkt, der links in Fig. 3 dargestellt ist, realisiert. Die nächstgrößere Intensität des Farbeindrucks wird durch den rechts davon mit b bezeichneten Bildpunkt realisiert, der einen größeren Durchmesser hat als der Bildpunkt a.

Wenn hier (und dies gilt nicht nur für Fig. 3, sondern auch für die anderen Figuren) kreisförmig Bildpunkte dargestellt sind, so beschränkt dies nicht die grundsätzlichen Gestaltungsmöglichkeiten. Vielmehr können auch einzelne Bildpunkte oder all Bildpunkte eine andere Form haben, z.B. eine elliptisch Form, eine Sternform, eine Rautenform (wie in Fig. 7 dargestellt). Im Allgemeinen kommt es auch nicht auf den Durchmesser, sondern auf die von dem Bildpunkt abgedeckte Fläche des Substrats an, wenn die Farbintensität eingestellt werden soll.

Die nächsthöhere Intensität wird durch einen Bildpunkt c realisiert, der noch einen größeren Durchmesser hat als der Bildpunkt b. Die höchstmögliche Farbintensität (Stufe 5) wird durch eine Gestaltung eines Pixels 31, wie rechts in Fig. 3 über dem Buchstaben d dargestellt, erzielt, bei der vier einzelne Teilflächen 32a-32d das Pixel bilden. Die kreisförmige strichpunktierte Umrisslinie entspricht keinem Druckstoff-Auftrag, sondern dient lediglich der grafischen Darstellung in Fig. 3.

Die anhand von Fig. 3 dargestellte Ausführungsform kann variiert werden. Z.B. können mehr Intensitätsstufen zur Verfügung stehen. Außerdem können die Pixel mehrerer Intensitätsstufen aus einer Mehrzahl von Teilflächen zusammengesetzt sein. Dabei wird jedoch bevorzugt, dass die Form, Anordnung und Anzahl der Teilflächen für eine bestimmte Intensitätsstufe, d.h. für einen bestimmten Betrag der durch Druckstoff abgedeckten Fläche, fest vorgegeben ist. Allerdings bedeutet dies nicht, dass in einer bestimmten Schicht alle Pixel dieser Intensitätsstufe so realisiert werden. Vielmehr kann z.B. außerdem eine einfache Grundform, z.B. wiederum die in Fig. 3 dargestellte Kreisform, für ein Pixel der bestimmten Intensitätsstufe vorgegeben sein. Die Verwendung der speziellen, aus mehreren Teilflächen zusammengesetzten Pixel kann auf einzelne Pixel in der Schicht oder auf einen oder mehrere Teilbereiche der Schicht beschränkt sein. Dies erschwert das Auffinden solcher charakteristischer Pixel, die dem charakteristischen Parameter der Schicht entsprechen, für potentielle Fälscher. Z.B. kann das Auffinden der speziellen Pixel durch eine geheime, vorgegebene Information für den kundigen Nutzer der aus dem Dokument erfassten Bildinformation erleichtert sein. Geeignet ist z.B. die Anordnung der speziellen Pixel in einem auffälligen Bildbereich, z.B. dem Auge einer Person, die das Bild darstellt.

Ferner können das oder die speziellen Pixelgestaltungen anders als in Fig. 3 rechts für Intensitätsstufe 5 dargestellt ausgeführt sein. Beispiele für andere Ausgestaltungen sind Fig. 4 bis Fig. 7 zu entnehmen. Fig. 4 macht deutlich, dass die Teilflächen 41a, 41b, 41c des Pixels 40 einander überlappen können. In der oben definierten Bedeutung von "Bildpunkt" bedeutet dies, dass die Teilflächen 41a-41c einen einzigen Bildpunkt 43 bilden. Dagegen haben die Teilflächen 32a-32d in Fig. 3 einen geringen Abstand voneinander, der allerdings in der Darstellung kaum erkennbar ist.

Fig. 5 zeigt ein Pixel 50 mit insgesamt 11 Bildpunkten. Von diesen 11 Bildpunkten befindet sich in der Mitte des Pixels 50 der einzige Bildpunkt 53 mit großem Durchmesser bzw. der größten Punktfläche. Außerdem sind insgesamt sieben Bildpunkte 52a-52g mit mittlerem Durchmesser bzw. mittlerer Punktfläche um den Bildpunkt 53 herum angeordnet. Ferner sind drei Bildpunkte 51a-51c in der Peripherie des Pixels 50 zwischen jeweils zwei Bildpunkten 52 angeordnet. Andere Gestaltungen von Pixeln, z.B. mit sowohl einander überlappenden Teilflächen als auch mit mehreren Bildpunkten sind ebenso möglich.

Ferner ist es möglich, dass bei Pixeln mit mehreren Bildpunkten die Anzahl und/oder Größe der das Pixel bildenden Bildpunkte und/oder Teilflächen variiert werden kann, um unterschiedliche Intensitätsstufen zu erzielen. Auf diese Weise können z.B. mehrere der in Fig. 3 dargestellten Intensitätsstufen durch solche "zusammengesetzten Pixel" gebildet werden.

Fig. 6 zeigt ein Ausführungsbeispiel für ein Pixel 60, das der oben stehenden Beschreibung eines Steuersignals zur Ansteuerung einer Düse eines Tintenstrahldruckers entspricht, wobei das Steuersignal zum Ausstoß einer Folge von Tintenstrahltropfen führt. Im Fall von Fig. 6 wurde zunächst ein größerer Tropfen ausgestoßen, der den Bildpunkt 61 gebildet hat, und dann ein zweiter, kleinerer Tropfen ausgestoßen, der den Bildpunkt 62 gebildet hat.

Fig. 7 zeigt einen Bildpunkt 70, der ein selbständiges Pixel sein kann oder aber auch ein Bildpunkt einer Anordnung von Bildpunkten zur Bildung eines Pixels sein kann.

An dieser Stelle soll, ohne Bezugnahme auf eine Figur, kurz auf eine mögliche Ausgestaltung einer Authentisierungs-Vorrichtung zum Feststellen, ob ein Dokument authentisch ist, eingegangen werden. Die Vorrichtung weist z.B. eine Erfassungseinrichtung auf, die entsprechend fein auflösende optische Mittel enthält, um die Druckbilder von mehreren Schichten des zu erfassenden Dokuments mit feiner Auflösung erfassen können. Z.B. können Farbfilter vorgesehen sein, z.B. optische Farbfilter, um die Bildinformation der einzelnen Schichten selektiv für jeweils nur eine Schicht zu erfassen. Nachdem die Bildinformationen aus allen Schichten selektiv erfasst worden sind, kann geprüft werden, ob die charakteristischen Parameter entsprechend einer vorgegebenen Vorschrift in dem Dokument realisiert sind oder nicht. Ist dies nicht der Fall, ist das Dokument nicht authentisch.

Die Farbfilter können aber alternativ oder zusätzlich auch durch Software realisiert sein. Dies setzt voraus, dass die Erfassungseinrichtung die Bildinformation in Abhängigkeit von der Farbe erfasst. Konkrete Ausgestaltungen einer Erfassungseinrichtung sind allgemein bekannt und werden hier nicht näher beschrieben.

Bei der Analyseeinrichtung zur Analyse, ob Pixel der Realisierung eines charakteristischen Parameters entsprechen, handelt es sich vorzugsweise um einen Computer, z.B. einen handelsüblichen, leistungsfähigen Personalcomputer mit entsprechender Software, die die Analyse gemäß der vorgegebenen Vorschrift ausführt. Ergebnis der Analyse sind Informationen z.B. über die Form und/oder Größe von Bildpunkten und/oder hinsichtlich Form, Größe, Anordnung und/oder Anzahl von Bildpunkten in dem Pixel.

Bei einer Variante kann ein charakteristischer Parameter dadurch realisiert sein, dass zwei oder mehr Druckstoffe derselben Farbe im sichtbaren Spektrum entsprechen. Einer der Druckstoffe jedoch enthält einen fluoreszierenden Zusatzstoff (oder, bei einem anderen Beispiel, einen anderen Zusatzstoff, der eine andere besondere physikalische Eigenschaft hat). Bei entsprechender Anregung kann ein zusätzliches Bild derjenigen Pixel aufgenommen werden, die eine Fluoreszenz zeigen. Z.B. dadurch, dass das Dokument nicht nur von der normalen, sich dem Betrachter des Bildes bietenden Seite erfasst werden, sondern auch z.B. von der Schmalseite eines kartenförmigen Dokuments aus, kann erfasst werden, in welcher Ebene und an welcher Position sich die fluoreszierenden Pixel befinden.

Die Prüfungseinrichtung, die vorzugsweise wiederum durch die Software auf dem handelsüblichen Computer realisiert ist, prüft nun, ob die von der Analyseeinrichtung gelieferten Analyseergebnisse mit der vorgegebenen Vorschrift übereinstimmen. Auf Basis der Ergebnisse der Prüfungseinrichtung ermittelt eine Ermittlungseinrichtung, die wiederum durch die Software realisiert sein kann, das Ergebnis, ob das Dokument authentisch ist oder nicht.

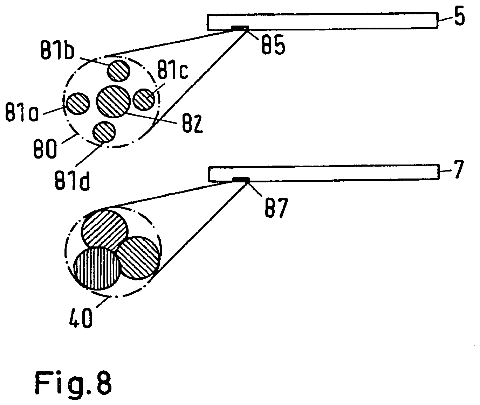

Fig. 8 zeigt zwei Lagen eines Dokuments in Explosionsdarstellung, wobei es sich z.B. um die Lagen 5 und 7 aus der Darstellung gemäß Fig. 1 und Fig. 2 handeln kann. An einer Stelle 85 an der Unterseite der Lage 5 befindet sich ein Pixel 80, wie es in vergrößerter Darstellung links in Fig. 8 dargestellt ist. Dieses Pixel 80 hat eine spezielle Anordnung von Bildpunkten 81a-81d, 82, ähnlich der in Fig. 5. An der Unterseite der Lage 7 befindet sich an einer Stelle 87 ein Pixel 40 gemäß der Gestaltung, die anhand von Fig. 4 beschrieben wurde. Die Pixel 80 und 40 sind jeweils charakteristisch für die Schicht an der Unterseite der Lage 5 bzw. die Schicht an der Unterseite der Lage 7. Dies bedeutet, dass das Pixel 40 an keiner Stelle an der Unterseite der Lage 5 vorkommt. Ebenfalls kommt das Pixel 80 an keiner Stelle an der Unterseite der Lage 7 vor. Bei entsprechend hochauflösender Erfassung der an den Unterseiten der Lagen 5 und 7 aufgedruckten gesamten Bildinformation kann daher zuverlässig erkannt werden, ob dieser charakteristische Parameter bei den Schichten realisiert ist.

Bei diesem Ausführungsbeispiel findet die schichtenselektive Erfassung, d.h. die Erfassung, dass das Pixel 80 an der Unterseite der Lage 5 angeordnet ist und das Pixel 40 an der Unterseite der Lage 7, vorzugsweise über die Farbe statt. An der Unterseite der Lage 5 ist nämlich das Druckbild lediglich in einer einzigen Farbe (z. B. Gelb) gebildet. Das Druckbild an der Unterseite der Lage 7 ist in einer anderen Farbe (z. B. Cyan) realisiert.

## Patentansprüche

1. Verfahren zum Herstellen eines Dokuments (1), wobei
a) in eine Mehrzahl von Schichten (15, 17, 19) des Dokuments (1) jeweils Bildinformation eingebracht wird, sodass sich die Bildinformation zu einem Gesamtbild ergänzt,
**dadurch gekennzeichnet, dass**
b) die Bildinformation durch Digitaldruck zumindest in einer ersten Schicht (15) und einer zweiten Schicht (17) aus Pixeln gebildet wird, wobei jedes der Pixel einen oder mehrere Bildpunkte aufweist,
c) zum Einbringen eines für die erste Schicht (15) charakteristischen Merkmals in das Dokument (1): Bildpunkte in der ersten Schicht (15) eine andere, für die erste Schicht (15) charakteristische Form und/oder charakteristische Größe aufweisen als in der zweiten Schicht und/oder zumindest ein Pixel in der ersten Schicht aus Bildpunkten anderer Form, Größe, Anordnung und/oder Anzahl zusammengesetzt ist als alle Pixel in der zweiten Schicht.

2. Verfahren nach Anspruch 1, wobei eine Mehrzahl benachbarter Lagen (5, 7. 9) des Dokuments (1) jeweils durch ein Polymermaterial gebildet werden und die benachbarten Lagen (5, 7, 9) miteinander fest verbunden werden, sodass diese Lagen (5, 7, 9) einen Polymermateriallagenverbund bilden.

3. Verfahren nach dem vorhergehenden Anspruch, wobei zumindest zwei der benachbarten Lagen (5, 7, 9) aus Polycarbonatmaterial gebildet werden.

4. Verfahren nach einem der vorhergehenden Ansprüche, wobei die Bildinformation in zumindest einer der Schichten (15, 17, 19) durch Druckstoffe gebildet wird, die Bindemittel auf Polycarbonatbasis enthalten.

5. Verfahren nach einem der vorhergehenden Ansprüche, wobei die Bildinformation zumindest in einer der Schichten (15, 17, 19) durch Pixel eines Tintenstrahldruckes gebildet wird.

6. Dokument, insbesondere Wert- und/oder Sicherheitsdokument, wobei
- das Dokument eine Mehrzahl von Schichten (15, 17, 19) aufweist, in die jeweils Bildinformation eingebracht ist, sodass sich die Bildinformation zu einem Gesamtbild ergänzt,
**dadurch gekennzeichnet, dass**
- die Bildinformation durch Digitaldruck in zumindest einer ersten Schicht (15) und einer zweiten Schicht (17) aus Pixeln gebildet ist, wobei jedes der Pixel einen oder mehrere Bildpunkte aufweist,
- Bildpunkte in der ersten Schicht (15) eine andere, für die erste Schicht (15) charakteristische Form und/oder charakteristische Größe aufweisen als in der zweiten Schicht und/oder zumindest ein Pixel in der ersten Schicht aus Bildpunkten anderer Form, Größe, Anordnung und/oder Anzahl zusammengesetzt ist als alle Pixel in der zweiten Schicht.

7. Dokument nach dem vorhergehenden Anspruch, wobei die Bildinformation in auch in einer dritten Schicht (19) aus Pixeln gebildet ist, wobei jedes der Pixel einen oder mehrere Bildpunkte aufweist und wobei Bildpunkte in der dritten Schicht (19) eine andere, für die dritte Schicht (19) charakteristische Form und/oder charakteristische Größe aufweisen als in der ersten und der zweiten Schicht und/oder zumindest ein Pixel in der dritten Schicht aus Bildpunkten anderer Form, Größe, Anordnung und/oder Anzahl zusammengesetzt ist als alle Pixel in der ersten und der zweiten Schicht.

8. Dokument nach einem der vorhergehenden Ansprüche, wobei eine Mehrzahl benachbarter Lagen (5, 7, 9) des Dokuments (1) jeweils durch ein Polymermaterial gebildet sind und die benachbarten Lagen (5, 7, 9) miteinander fest verbunden sind, sodass diese Lagen (5, 7, 9) einen Polymermateriallagenverbund bilden.

9. Dokument nach dem vorhergehenden Anspruch, wobei zumindest zwei der benachbarten Lagen (5, 7, 9) Polycarbonatmaterial aufweisen.

10. Dokument nach einem der vorhergehenden Ansprüche, wobei die Bildinformation in zumindest einer der Schichten (15, 17, 19) durch Druckstoffe gebildet ist, die Bindemittel auf Polycarbonatbasis enthalten.

11. Dokument nach einem der vorhergehenden Ansprüche, wobei die Bildinformation in den einzelnen Schichten (15, 17, 19) des Dokuments (1) durch jeweils eine andere Farbe dargestellt ist.

12. Authentisierungs-Verfahren zum Feststellen, ob ein Dokument authentisch ist, wobei
a) jeweils in einer Mehrzahl von Schichten (15, 17, 19) des Dokuments (1) Bildinformation erfasst wird, wobei die Bildinformationen der verschiedenen Schichten (15, 17, 19) Teile eines Gesamtbildes sind,
b) in der erfassten Bildinformation zumindest einer ersten Schicht (15) und einer zweiten Schicht (17) Pixel hinsichtlich Form und/oder Größe von Bildpunkten und/oder hinsichtlich Form, Größe, Anordnung und/oder Anzahl von Bildpunkten in dem Pixel analysiert werden, wobei jedes der Pixel einen oder mehrere Bildpunkte aufweist,
c) Folgendes auf Übereinstimmung mit einer vorgegebenen Vorschrift geprüft wird:
• Bildpunkte mit einer charakteristischen Form und/oder charakteristischen Größe befinden sich in der ersten Schicht (15), nicht aber in der zweiten Schicht und/oder
• Pixel in der ersten Schicht (15), die in charakteristischer Weise aus Bildpunkten vorgegebener Form, Größe, Anordnung und/oder Anzahl zusammengesetzt sind, befinden sich in der ersten Schicht (15), nicht aber in der zweiten Schicht (17),
d) aus Ergebnissen der Prüfung wird ermittelt, ob das Dokument authentisch ist oder nicht.

13. Authentisierungs-Verfahren nach dem vorhergehenden Anspruch, wobei auch Bildinformation einer dritten Schicht (19) Pixel hinsichtlich Form und/oder Größe von Bildpunkten und/oder hinsichtlich Form, Größe, Anordnung und/oder Anzahl von Bildpunkten in dem Pixel analysiert werden, wobei jedes der Pixel einen oder mehrere Bildpunkte aufweist, und wobei bei der Prüfung in Schritt c) geprüft wird, ob Pixel der drei Schichten (15, 17, 19) mit der vorgegebenen Vorschrift übereinstimmen.

14. Authentisierungs-Verfahren nach einem der vorhergehenden Ansprüche, wobei die Bildinformation zumindest in einer der Schichten (15, 17, 19), durch Erfassung einer Pixel-Struktur eines Tintenstrahldruckes in der Schicht erfasst wird.

15. Verwendung einer Authentisierungs-Vorrichtung zum Feststellen, ob ein Dokument authentisch ist, wobei die Vorrichtung Folgendes aufweist:
a) eine Erfassungseinrichtung, die dazu verwendet wird, jeweils in einer Mehrzahl von Schichten (15, 17, 19) des Dokuments (1) Bildinformation zu erfassen, wobei die Bildinformation der verschiedenen Schichten (15, 17, 19) sich zu einem Gesamtbild ergänzt,
b) eine Analyseeinrichtung, die dazu verwendet wird, in der erfassten Bildinformation zumindest einer ersten Schicht (15) und einer zweiten Schicht (17) Pixel hinsichtlich Form und/oder Größe von Bildpunkten und/oder hinsichtlich Form, Größe, Anordnung und/oder Anzahl von Bildpunkten in dem Pixel zu analysieren, wobei jedes der Pixel einen oder mehrere Bildpunkte aufweist,
c) eine Prüfungseinrichtung, die dazu verwendet wird, Folgendes auf Übereinstimmung mit einer vorgegebenen Vorschrift zu prüfen:
• Bildpunkte mit einer charakteristischen Form und/oder charakteristischen Größe befinden sich in der ersten Schicht (15), nicht aber in der zweiten Schicht und/oder
• Pixel in der ersten Schicht (15), die in charakteristischer Weise aus Bildpunkten vorgegebener Form, Größe, Anordnung und/oder Anzahl zusammengesetzt sind, befinden sich in der ersten Schicht (15), nicht aber in der zweiten Schicht (17),
d) eine Ermittlungseinrichtung, die dazu verwendet wird, aus Ergebnissen der Prüfung zu ermitteln, ob das Dokument authentisch ist oder nicht.

## Claims

1. A method for producing a document (1), wherein
a) image information is introduced into each of a plurality of layers (15, 17, 19) of the document (1), such that the image information complements one another to a whole image,
**characterised in that**
b) the image information, at least in a first layer (15) and a second layer (17), is formed from pixels by means of digital printing, wherein each of the pixels has one or more image points,
c) in order to introduce a feature that is characteristic of the first layer (15) into the document (1): in the first layer (15), image points have a shape and/or size that are/is characteristic of the first layer (15) that are/is different from the shape and/or size of the image points in the second layer, and/or at least one pixel in the first layer is composed of image points that have a different shape, size, arrangement and/or number than all the pixels in the second layer.

2. The method according to claim 1, wherein a plurality of adjacent layers (5, 7, 9) of the document (1) are each formed by a polymer material and the adjacent layers (5, 7, 9) are fixedly connected to one another, such that these layers (5, 7, 9) form a layered polymer material composite.

3. The method according to the preceding claim, wherein at least two of the adjacent layers (5, 7, 9) are formed from polycarbonate material.

4. The method according to any one of the preceding claims, wherein the image information in at least one of the layers (15, 17, 19) is formed by printing materials that contain polycarbonate-based binder.

5. The method according to any one of the preceding claims, wherein the image information is formed at least in one of the layers (15, 17, 19) by pixels of an inkjet printing.

6. A document, in particular value and/or security document, wherein
- the document has a plurality of layers (15, 17, 19), with image information introduced into each of said layers, such that the image information complements one another to a whole image,
**characterised in that**
- the image information, at least in a first layer (15) and a second layer (17), is formed from pixels by means of digital printing, wherein each of the pixels has one or more image points,
- image points in the first layer (15) have a shape and/or size that are/is characteristic of the first layer (15) that are/is different from the shape and/or size of the image points in the second layer, and/or at least one pixel in the first layer is composed of image points that have a different shape, size, arrangement and/or number than all the pixels in the second layer.

7. The document according to the preceding claim, wherein the image information in a third layer (19) is also formed from pixels, wherein each of the pixels has one or more image points, and wherein image points in the third layer (19) have a shape and/or size that are/is characteristic for the third layer (19) that are/is different from the shape and/or size of the image points in the first and the second layer, and/or at least one pixel in the third layer is composed of image points that have a different shape, size, arrangement and/or number than all the pixels in the first and the second layer.

8. The document according to any one of the preceding claims, wherein a plurality of adjacent layers (5, 7, 9) of the document (1) are each formed by a polymer material and the adjacent layers (5, 7, 9) are fixedly connected to one another, such that these layers (5, 7, 9) form a layered polymer material composite.

9. The document according to the preceding claim, wherein at least two of the adjacent layers (5, 7, 9) comprise polycarbonate material.

10. The document according to any one of the preceding claims, wherein the image information in at least one of the layers (15, 17, 19) is formed by printing materials that contain polycarbonate-based binder.

11. The document according to any one of the preceding claims, wherein the image information in the individual layers (15, 17, 19) of the document (1) is represented in each case by a different colour.

12. An authentication method for determining whether a document is authentic, wherein
a) image information is detected in each of a plurality of layers (15, 17, 19) of the document (1), wherein the image information in the various layers (15, 17, 19) are parts of a whole image,
b) in the detected image information of at least a first layer (15) and a second layer (17), pixels are analysed in respect of the shape and/or size of image points and/or in respect of shape, size, arrangement and/or number of image points in the pixel, wherein each of the pixels has one or more image points,
c) the following are/is examined for compliance with a predefined specification:
• image points with a characteristic shape and/or characteristic size are in the first layer (15), but not in the second layer, and/or
• pixels in the first layer (15), which are composed characteristically of image points of predefined shape, size, arrangement and/or number, are in the first layer (15), but not in the second layer (17),
d) on the basis of the results of the test, it is determined whether or not the document is authentic.

13. The authentication method according to the preceding claim, wherein pixels of image information of a third layer (19) are also analysed in respect of shape and/or size of image points and/or in respect of shape, size, arrangement and/or number of image points in the pixel, wherein each of the pixels has one or more image points, and wherein, during the examination in step c), it is examined whether pixels of the three layers (15, 17, 19) comply with the predefined specification.

14. The authentication method according to any one of the preceding claims, wherein the image information at least in one of the layers (15, 17, 19) is detected by detection of a pixel structure of an inkjet printing.

15. Use of an authentication device to determine whether a document is authentic, wherein the device comprises the following:
a) a detection device, which is used to detect image information in a plurality of layers (15, 17, 19) of the document (1), wherein the image information of the various layers (15, 17, 19) complements one another to a whole image,
b) an analysis device, which is used to analyse pixels in the detected image information of at least a first layer (15) and a second layer (17) in respect of shape and/or size of image points and/or in respect of shape, size, arrangement and/or number of image points in the pixel, wherein each of the pixels has one or more image points,
c) an examination device, which is used to examine the following for compliance with a predefined specification:
• image points with a characteristic shape and/or characteristic size are in the first layer (15), but not in the second layer, and/or
• pixels in the first layer (15), which are composed characteristically of image points of predefined shape, size, arrangement and/or number, are in the first layer (15), but not in the second layer (17),
d) a determination device, which is used to determine whether or not the document is authentic on the basis of the results of the examination.

## Revendications

1. Procédé servant à fabriquer un document (1), dans lequel
a) respectivement une information d'image est introduite dans une multitude de couches (15, 17, 19) du document (1) de sorte que l'information d'image se complète pour donner une image globale,
**caractérisé en ce que**
b) l'information d'image est formée à partir de pixels par impression numérique au moins dans une première couche (15) et dans une deuxième couche (17), dans lequel chacun des pixels présente un ou plusieurs points d'image,
c) afin d'introduire dans le document (1) une caractéristique typique de la première couche (15) : des points d'image dans la première couche (15) présentent une forme et/ou une dimension typiques de la première couche (15) autres que dans la deuxième couche et/ou au moins un pixel dans la première couche est composé de points d'image d'une forme, dimension, agencement et/ou en un nombre autres que tous les pixels dans la deuxième couche.

2. Procédé selon la revendication 1, dans lequel une multitude de strates (5, 7, 9) adjacentes du document (1) sont formées respectivement par un matériau polymère et les strates (5, 7, 9) adjacentes sont reliées de manière solidaire les unes aux autres de sorte que lesdites strates (5, 7, 9) forment un composite de strates en matériau polymère.

3. Procédé selon la revendication précédente, dans lequel au moins deux des strates (5, 7, 9) adjacentes sont formées à partir d'un matériau en polycarbonate.

4. Procédé selon l'une quelconque des revendications précédentes, dans lequel l'information d'image est formée dans au moins une des couches (15, 17, 19) par des matières imprimées, qui contiennent des liants à base de polycarbonate.

5. Procédé selon l'une quelconque des revendications précédentes, dans lequel l'information d'image est formée au moins dans une des couches (15, 17, 19) par des pixels d'une impression à jet d'encre.

6. Document, en particulier document de valeur et/ou de sécurité, dans lequel
- le document présente une multitude de couches (15, 17, 19), dans lesquelles respectivement une information d'image est introduite de sorte que l'information d'image se complète pour donner une image globale,
**caractérisé en ce que**
- l'information d'image est formée à partir de pixels par impression numérique dans au moins une première couche (15) et une deuxième couche (17), dans lequel chacun des pixels présente un ou plusieurs points d'image,
- des points d'image dans la première couche (15) présentent une forme et/ou une dimension typiques de la première couche (15) autres que dans la deuxième couche et/ou au moins un pixel dans la première couche est composé de points d'image de forme, dimension, agencement et/ou en nombre autres que tous les pixels dans la deuxième couche.

7. Document selon la revendication précédente, dans lequel l'information d'image est formée également dans une troisième couche (19) à partir de pixels, dans lequel chacun des pixels présente un ou plusieurs points d'image et dans lequel des points d'image dans la troisième couche (19) présentent une forme et/ou une dimension typiques de la troisième couche (19) autres que dans la première et dans la deuxième couche et/ou au moins un pixel dans la troisième couche est composé de points d'image de forme, dimension, agencement et/ou en nombre autres que tous les pixels dans la première et dans la deuxième couche.

8. Document selon l'une quelconque des revendications précédentes, dans lequel une multitude de strates (5, 7, 9) adjacentes du document (1) sont formées respectivement par un matériau polymère et les strates (5, 7, 9) adjacentes sont reliées de manière solidaire les unes aux autres de sorte que lesdites strates (5, 7, 9) forment un composite de strates en matériau polymère.

9. Document selon la revendication précédente, dans lequel au moins deux des strates (5, 7, 9) adjacentes présentent un matériau en polycarbonate.

10. Document selon l'une quelconque des revendications précédentes, dans lequel l'information d'image est formée dans au moins une des couches (15, 17, 19) par des matières imprimées, qui contiennent des liants à base de polycarbonate.

11. Document selon l'une quelconque des revendications précédentes, dans lequel l'information d'image est représentée dans les diverses couches (15, 17, 19) du document (1) par respectivement une autre couleur.

12. Procédé d'authentification servant à constater si un document est authentique, dans lequel
a) respectivement une information d'image est détectée dans une multitude de couches (15, 17, 19) du document (1), dans lequel les informations d'image des différentes couches (15, 17, 19) font partie d'une image globale,
b) la forme et/ou la dimension de points d'image et/ou la forme, la dimension, l'agencement et/ou le nombre de points d'image dans le pixel des pixels sont analysés dans l'information d'image détectée au moins d'une première couche (15) et d'une deuxième couche (17), dans lequel chacun des pixels présente un ou plusieurs points d'image,
c) la concordance des éléments qui suivent avec une spécification prédéfinie est vérifiée :
- des points d'image présentant une forme et/ou une dimension typiques se trouvent dans la première couche (15), toutefois pas dans la deuxième couche et/ou
- des pixels dans la première couche (15), qui sont composés d'une manière typique de points d'image de forme, dimension, agencement et/ou en nombre prédéfinis se trouvent dans la première couche (15), toutefois pas dans la deuxième couche (17),
d) on détermine à partir de résultats du contrôle si le document est authentique ou non.

13. Procédé d'authentification selon la revendication précédente, dans lequel également la forme et/ou la dimension et/ou la forme, la dimension l'agencement et/ou le nombre de points d'image dans le pixel des pixels sont analysés dans l'information d'image d'une troisième couche (19), dans lequel chacun des pixels présente un ou plusieurs points d'image, et dans lequel on vérifie lors de la vérification à l'étape c) si des pixels des trois couches (15, 17, 19) coïncident avec la spécification prédéfinie.

14. Procédé d'authentification selon l'une quelconque des revendications précédentes, dans lequel l'information d'image au moins dans une des couches (15, 17, 19) est détectée par la détection d'une structure de pixels d'une impression à jet d'encre dans la couche.

15. Utilisation d'un dispositif d'authentification servant à constater si un document est authentique, dans laquelle le dispositif présente des éléments qui suivent :
a) un système de détection, qui est utilisé pour détecter respectivement dans une multitude de couches (15, 17, 19) du document (1) une information d'image, dans laquelle l'information d'image des différentes couches (15, 17, 19) se complète pour donner une image globale,
b) un système d'analyse, qui est utilisé pour analyser dans l'information d'image détectée d'au moins une première couche (15) et une deuxième couche (17) la forme et/ou la dimension de points d'image de pixels et/ou la forme, la dimension, l'agencement et/ou le nombre de points d'image dans le pixel, dans lequel chacun des pixels présente un ou plusieurs points d'image,
c) un système de vérification, qui est utilisé afin de vérifier la concordance des éléments qui suivent avec une spécification prédéfinie :
- des points d'image présentant une forme et/ou une dimension typiques se trouvent dans la première couche (15), toutefois pas dans la deuxième couche, et/ou
- des pixels dans la première couche (15), qui sont composés d'une manière typique de points d'image d'une forme, d'une dimension, d'un agencement et/ou en un nombre prédéfinis, se trouvent dans la première couche (15), toutefois pas dans la deuxième couche (17),
d) un système de détermination qui est utilisé pour déterminer à partir de résultats de la vérification si le document est authentique ou non.
